# EUROPEAN PATENT APPLICATION

(11) **EP 0 968 884 A2**
(43) Date of publication of application: **05.01.2000**
(21) Application number: 99112796.0
(22) Date of filing: 02.07.1999
(51) Int. Cl.: B60R 16/02

(54) **Power supplying apparatus for vehicle and intensive wiring apparatus**

(30) Priority: 03.07.1998 JP 18854998
(71) Applicant: Hitachi, Ltd., Chiyoda-ku, Tokyo 101-8010 (JP); Hitachi Car Engineering Co., Ltd., Hitachinaka-shi, Ibaraki 312-0062 (JP)
(72) Inventor: Yoshida, Tatsuya, Naka-gun, Ibaraki 319-2104 (JP); Saito, Hiroyuki, Hitachinaka-shi, Ibaraki 312-0012 (JP); Sakamoto, Shinichi Haitsu Shiraume A 101, Ibaraki 310-0804 (JP); Kon-i, Mitsuru, Hitachinaka-shi, Ibaraki 312-0053 (JP); Kuramochi, Yuichi, Hitachinaka-shi, Ibaraki 312-0063 (JP); Okamoto, Kaneyuki, Hitachinaka-shi, Ibaraki 312-0063 (JP); Ohsaka, Ichiro, Kawasaki-shi, Kanagawa 211-0957 (JP); Horibe, Kiyoshi, Hitachi-shi, Ibaraki 317-0072 (JP)
(74) Representative: Beetz & Partner Patentanwälte

(57) **Abstract**

An electric power line (12A-H) is wired with a loop shape and from this electric power line a power supply for a load is supplied, and according to another system against this electric power line, a control system power supply is supplied. One shutdown means is provided in a module (5,14,29) which is connected to the loop shape power supply supplying line, when the electric power line (12A-H) and the load become a short, by separating using the shutdown means, only a fail point can be separated. Further, during a sleep time, by stopping the power supply supplying to the load, a consumption current can be restrained. According to a detection a ground short and a fail on a connection of a connector, an over-current prevention of an electric power line (12A-H) a simple construction can be improved and a low consumption current can be realized.

## Description

### Background of the Invention :

The present invention relates to a power supplying apparatus for supplying a power from a power supply which is mounted on a vehicle of plural electric loads mounted on the vehicle and in particularly relates to a power supplying apparatus suitable for use in an automobile.

In a vehicle, an electrical mounting component is installed as the various kinds of the electric loads. And, for example, in an automobile, from a power supply supplying apparatus such as a battery and a generator, to supply a power to the various kinds of the electric loads, various numbers of power supply wire harnesses are used.

And, when an electric power line (a wire harness) is carried out a wiring to an actual vehicle, taking into consideration about a wiring working performance and a mending working of a fail time, a manner in which each area such as an engine room, an interior portion of a cabin, a trunk room, a door each, by dividing the wire harness, they are connected using a connector.

Accordingly, to these harnesses which are divided plural numbers using the connector, the power is supplied through the various kinds of the connectors to reach the end loads from the power supply supplying apparatus such as the battery.

Further, in the power supplying system in the vehicle stated in above, in generally one side ground power supply system, in other words, as one side of the power supply line from the power supply, a power supplying system in which a part of a vehicle body of the vehicle is utilized is adopted, for this reason, a short occurrence (a short circuit abnormality) is generated only by touching the electric power line to the vehicle body.

Therefore, in the conventional power supplying apparatus for the vehicle, since a fuse box is provided to a predetermined place of the vehicle and further a fuse (a fusible chip) for protecting an over-current is provided at every predetermined load system each from the power supplying apparatus, when the short is occurred in the electric power line, by fusing the fuse the power supply is separated and accordingly the protection of the apparatus can be obtained.

And, such a fuse is received in a lump in a lower portion of a console box of the automobile and in a fuse box which is provided to an interior portion of the trunk room.

Accordingly, in the prior art, in accordance with the load, the load is connected to the power supply with a very long wire harness. Further, when the electric power line is performed the short-circuit and becomes a fail, to before of the fusing of the fuse, and not to generate the smokes in the electric power line, it is necessary to make a regular current of the electric power line to a fuse regular current of the fuse, as a result, the vehicle uses a bold wire line is used as the electric power line.

Further, even the fitting-into portion of the connector is loosed at a midway of the wire harness and then the fail on the connection of the connector occurs, the power supply to the load becomes unstable. Further, since the wire harness is carried out the wiring by hiding in an inner side of a trim (an interior mounting), there are problems in which a specification of the short abnormality portions of the electric power line and a specification of a place in which the fail on the connection of the connector are difficult.

As to the above stated solving problems, the inventors of the present invention have proposed a new power supply supplying system in an international announcement laid-open publication No. WO 96/26570.

### Summary of the Invention :

The present invention is devised further the above stated new system and has following objects.

An object of the present invention is to provide a power supplying apparatus wherein a high reliability performance can be obtained against to an abnormality (for example, a short-circuit) of an electric power line.

Further, another of object of the present invention is to provide a power supplying apparatus wherein the power can be supplied using a wire harness having a comparative low regular current.

Further, a further object of the present invention is to provide a power supplying apparatus for a vehicle wherein an abnormality portion and/or a fail portion of the connection of a connector during a generation of a short-circuit abnormality of a wire harness.

Further, a further more object of the present invention is to a power supplying apparatus wherein an unnecessary load current is not flown to an electric power line and a consumption electric power can be reduced.

A further more object of the present invention is to provide a power supplying apparatus wherein a fuse and a relay are arranged at a vicinity of a control module and a power wiring can be shortened.

One object stated in above is attained that between a power supply and an electric load a fuse and/or an electric line shutdown apparatus (for example, a relay, a self shutdown switching element) is arranged, and to the short, a double protection system or a triple protection system is provided.

Another object can be attained that through a control unit from a power supply, to supply a power to an electric load one side ground supply system in which a car body of a vehicle is a conductive electric line is carried out, and to connect equivalently in parallel at a respective control units an impedance of a power line, the control unit is connected to an electric power line for a load.

Further object can be attained that a power supply supplying line for a control is arranged independently to a power supply supplying line for a load and at an unnecessary time a power supply for the load is performed the shutdown and controlled through a shutdown circuit.

Further object can be attained that an independent short sensor is provided at plural intervals of an electric power line, and when a short abnormality and a fail of connection of a connector abnormality is generated, it is judged that the abnormality is detected at which interval.

Further, it is preferable to combine the present invention with a system in which a control signal is received and sent between plural control units in accordance with a communication control.

Further, in the present invention, a control module has a relay and/or a fuse between an electric power line for a load and an electric load, the relay and/or the fuse is received at a vicinity of the control module which controls the electric load. Preferably, a relay box and/or a fuse box is installed to the control module as one body and then the control unit is constituted.

### Brief Description of Drawings :

Fig. 1 is a system arrangement of an automobile to which the present invention is applied;
Fig. 2 is a first embodiment of a whole system view of an automobile to which the present invention is applied;
Fig. 3 is a second embodiment of a whole system view of an automobile to which the present invention is applied;
Fig. 4 is a third embodiment of a whole system view of an automobile to which the present invention is applied;
Fig. 5 is FIM module construction view of the system shown in Fig. 2;
Fig. 6 is BCM module construction view of the system shown in Fig. 2;
Fig. 7 is RIM module construction view of the system shown in Fig. 2, Fig. 3 and Fig. 4;
Fig. 8 is PCM module construction view of the system shown in Fig. 2;
Fig. 9 is DDM module construction view of the system shown in Fig. 2, Fig. 3 and Fig. 4;
Fig. 10 is FIM module construction view of the system shown in Fig. 3 and Fig. 4;
Fig. 11 is BCM module construction view of the system shown in Fig. 3;
Fig. 12 is PCM module construction view of the system shown in Fig. 3;
Fig. 13 is BCM module construction view of the system shown in Fig. 4;
Fig. 14 is PCM module construction view of the system shown in Fig. 4;
Fig. 15 is another embodiment of FIM module construction view of the system shown in Fig. 2;
Fig. 16 is another embodiment of BCM module construction view of the system shown in Fig. 2;
Fig. 17 is another embodiment of RIM module construction view of the system shown in Fig. 2;
Fig. 18 is a motor drive H bridge circuit construction (1);
Fig. 19 is a motor drive H bridge circuit construction (2);
Fig. 20 is a motor drive H bridge circuit construction (3);
Fig. 21 is a motor drive H bridge circuit construction (4);
Fig. 22 is an over-current detection circuit construction according to a shut resistor;
Fig. 23 is an over-current detection circuit construction according to a shut resistor and a fuse;
Fig. 24 is an over-current detection circuit construction according to PCT element;
Fig. 25 is a characteristic of PCT element;
Fig. 26 is a short sensor construction (1);
Fig. 27 is a short sensor construction (2);
Fig. 28 is a short sensor construction (3);
Fig. 29 is an operation waveform of a short sensor detection circuit;
Fig. 30 is an algorithm of power bus over-current detection and protection operation;
Fig. 31 is a logical value table (1) of a load power supply shutdown circuit during power bus fail;
Fig. 32 is a logical value table (2) of a load power supply shutdown circuit during power bus fail;
Fig. 33 is BCM process flow chart during power bus fail;
Fig. 34 is FIM process flow chart during power bus fail;
Fig. 35 is RIM process flow chart during power bus fail in which the logical value table shown in Fig. 32 is realized;
Fig. 36 is RIM process flow chart during power bus fail in which the logical value table shown in Fig. 33 is realized;
Fig. 37 is an algorithm of load and short detection and protection operation;
Fig. 38 is an algorithm of load over-current detection and protection operation;
Fig. 39 is a lamp current characteristic;
Fig. 40 is a motor current characteristic;
Fig. 41 is a current characteristic during plural drive operations;
Fig. 42 is a module construction view (1);
Fig. 43 is a module construction view (2);
Fig. 44 is a connector having a shut resistor construction view (1); and
Fig. 45 is a connector having a shut resistor construction view (2).

### Description of the Invention :

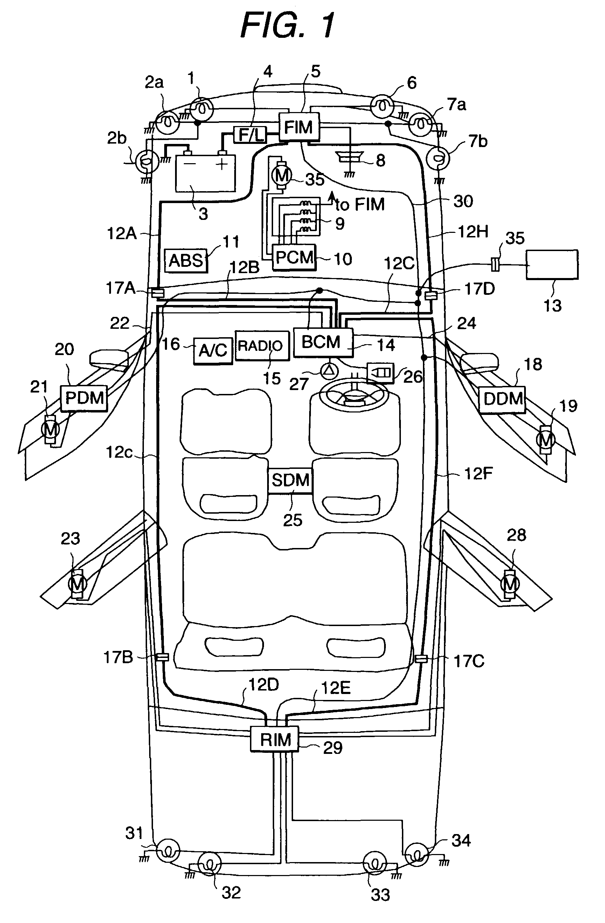

Fig. 1 shows a whole system view of an automobile in which the present invention is adopted and shows an arrangement of components for constituting the present invention.

3 denotes a battery and through a fusible link 4 which is arranged closed by the battery 3 the battery 3 supplies a power supply to a whole vehicle. A power train control module (PCM) 10 carries out the controls of a fuel injection amount and an ignition timing of an engine and a control of a throttle valve opening degree and a control of an engine transmission.

The above stated PCM 10 is installed to a portion closed by the engine (for example, at outer wall of an intake air conduit and an outer wall of a serge tank and an interior portion of an air cleaner). To PCM 10, various sensors such as an air flow meter, a water temperature sensor and a crank angle sensor are connected and further an actuator group comprised of an injector 9, and an ignition means, a throttle motor 35 for opening and closing a throttle valve as the electric loads are connected.

A control module 11 for an anti-lock brake system (ABS) use is mounted at a rear portion of an engine room which is provided adjacently to ABS use actuator. An air conditioner control unit (A/C) 16 is arranged at a vicinity of a dashboard of a passenger seat which is positioned at a near portion of an installation place of an A/C use temperature sensor and the actuator. An air-bag control module (SDM) 25 is mounted at a vicinity of a center console box.

A body control module (BCM) 14 connects a display device at a vicinity of a steering and an ignition key switch 26, a hazard switch 27, a winker switch, a wiper switch etc. and is installed to at a vicinity of the dashboard.

Each of these modules has at least an execution processing unit or a central processing unit (CPU) and a communication circuit (a communication IC) for carrying out a data communication between other modules. Each of the modules is installed at a vicinity of the devices such as the sensor and the electric load etc. which are connected to these modules and according to this a length of a harness between the devices which are connected to these modules can be shortened.

A front integration module (FIM) 5 is arranged at a front portion of the engine room which is provided adjacently to head lamps 1, 6, turn signal lamps 2a, 2b (left), and 7a, 7b (right) and is connected to drive the above stated head lamps 1, 6, the turn signal lamps 2a, 2b, 7a, 7b and a horn 8 which is mounted closed by.

A driver door module (DDM) 18, a passenger door module (PDM)20 are mounted to a door at a driver seat side and a door at the passenger seat side and door lock motors 19, 21, a power window motor, a door lock switch (SW), a power window switch (SW), and an electric driven mirror motor (all not shown) are connected.

A rear integration module (RIM) 29 is arranged at a front portion of the engine room which is provided adjacently to tail lamps 32, 33 and turn signal lamps 31, 34 and is connected to drive the above stated tail lamps 32, 33 and the above stated turn signal lamps 31, 34 and further a trunk opener use motor, a rear defogging means, rear seat use door lock motors 23, 28, a power window motor, a door lock switch (SW) and a power window switch (SW), etc..

Each of the above stated FIM 5, RIM 29, DDM 18 and PDM 20 has a communication circuit which carries out a data transfer between other modules. Further, they have an input/output interface to which the sensor and the switch etc. and the devices of the outside portion electric loads are connected and an execution processing unit or a central processing unit (CPU) which executes a control signal to the electric loads. To carry out the data transfer between these modules, a multiple communication line 30 connects between the communication circuits of the respective modules.

As state above, since the respective modules is arranged at a vicinity of the devices to which the modules are connected and since an input data and an output data of the devices to which the device self is not connected are received and sent between other modules through the multiple communication line, a data necessary for the respective modules can be obtained.

The multiple communication line 30 can be connected to a diagnosis apparatus 13 through a connector 35 and the diagnosis apparatus 13 can be obtained the information necessary for the diagnosis from the respective modules through the communication line.

An electric power line from the battery 3 is connected to FIM 5 through the fusible link 4. Between from FIM 5 to BCM 14 is connected through an electric power line 12A, a connector 17A and an electric power line 12B, between from BCM 14 to RIM 29 is connected through an electric power line 12C, a connector 17B and an electric power line 12D, between from RIM 29 to BCM 14 is connected through an electric power line 12E, a connector 17C and an electric power line 12F, and between from BCM 14 to FIM 5 is connected through an electric power line 12G, a connector 17D and an electric power line 12H, respectively.

Thus the electric power lines are wired with a loop shape in the vehicle. As stated in above, the electric power lines are wired with the loop shape in the vehicle and to these loop shaped wired electric power lines the respective modules are connected and the electric power lines are connected to the respective modules and then the power is supplied to the various kinds of the actuators as the electric loads through the respective modules.

The respective modules is constituted to be arranged every one each to the engine room, the cabin and the trunk room (in this embodiment, they are constituted by FIM, BCM, RIM).

According to the constitution of this embodiment, the impedance of the power line with the respective control units is connected in parallel equivalently and a power system can be constituted using the electric power line having a small regular current. DDM 18, PDM 20 are arranged in the door and are constituted to supply the power supply from BCM 14.

A loop shape wired electric power line is attached and detached by connectors 17A, 17B, 17C, 17D and the electric power line 12A and the electric power line 12H are arranged separately in the engine room, the electric power line 12B, the electric power line 12C, the electric power line 12F and the electric power line 12G are arranged separately in a room of the vehicle and further the electric power line 12D and the electric power line 12E are arranged separately in the trunk room, respectively.

Accordingly, the electric power lines are connected to wire with the loop shape and in addition to this the control modules can be connected with a star shape and a tree shape. For example, the electric power lines 12H, 12F, 12G, 12H are connected by the connectors 17D and 17C and when they are detached from the apparatus is constituted to form a tree connection wiring.

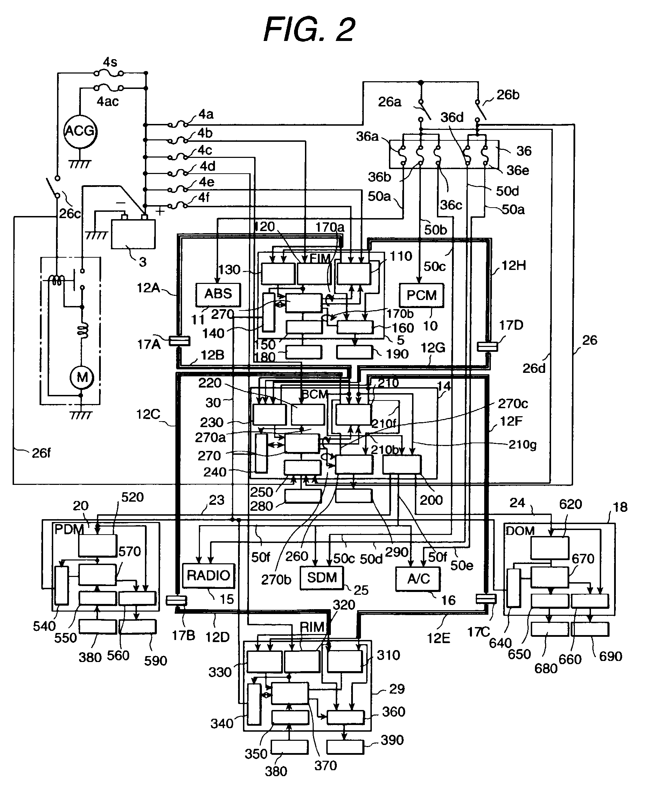

Next, three embodiments in which a loop system electrical connection layout power supply supplying system will be explained referring to Fig. 2, Fig. 3 and Fig. 4. Firstly, a construction of an embodiment shown in Fig. 2 will be explained.

The electric power line which is wired with the loop shape explained in Fig. 1 is connected to a load power supply shutdown circuit 110 of FIM 5 form the battery 3 through fusible links 4f and 4e. The power supply from the fusible link 4f is connected to the electric power line 12A via the load power supply shutdown circuit 110.

The electric power line 12A is connected to one end of the electric power line 12B according to the connector 17A and another end is connected to a module side connector of a latter stated BCM to a load power supply shutdown circuit 210 of BCM 14.

The electric power line 12B is connected electrically to the electric power line 12C in which one end is connected to a module side connector of a latter stated BCM via the load power supply shutdown circuit 210.

Another end of the electric power line 12C is connected to one end of the electric power line 12D according to the connector 17B and is connected to a load power supply shutdown circuit 310 of RIM 29 via a latter stated module side connector of RIM.

Another end of the electric power line 12D is connected electrically to the electric power line 12E in which one end is connected to a module side connector of a latter stated RIM via the load power supply shutdown circuit 310 of RIM 29.

Another end of the electric power line 12E is connected to one end of the electric power line 12F according to the connector 17C and another end of the electric power line 12F is connected to the load power supply shutdown circuit 210 of BCM 14.

Another end of the electric power line 12F is connected electrically to one end of the electric power line 12G via a module side connector of a latter stated BCM and another end of the electric power line 12G is connected to one end of the electric power line 12H according to the connector 17D and another end of the electric power line 12G is connected to the load power supply shutdown circuit 110 of FIM 5 via a module side connector.

On the other side, the power supply from the fusible link 4e is connected electrically to another end of the electric power line 12H through a latter stated module side connector via the load power supply shutdown circuit 110 of FIM 5, and as a result the electric power lines 12A - 12H are wired with the loop shape through the fuses 4e and 4f. Hereinafter, this loop shape wired electric power line is given general name as a power bus 12.

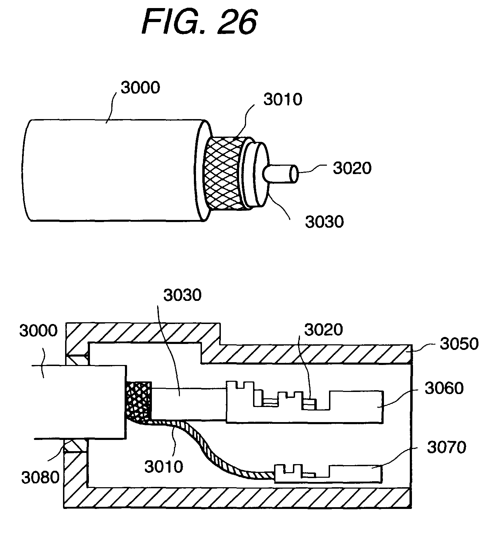

One example of the structure of these electric power lines 12A, 12B, 12C, 12D, 12E, 12F, 12G and 12H, as shown in Fig. 26, is constituted as a center of an electric power line 3020, an insulation member 3030 which covers a surrounding portion of the electric power line 3020, a conductive body 3010 which covers an outer periphery of the insulation member 3030 and an insulation material 3000 which covers an outer periphery of the insulation body 3010.

Herein, firstly the electric power line 3020 is made by a copper single wire or a copper twist wire and forms an power supplying use conductive line. The insulation member 3030 is made by an insulation body such as a rubber and a plastic and works to insulate the electric power line 3020.

The conductive body 3010 is formed with a layer shape at an outer periphery of the insulation member 3030 by knitting together (hereinafter, a knit assembly wire) the thin copper wire. The insulation member 3000 is formed by an insulation body such as a rubber and a plastic and functions as a protection layer of a cable.

A function of the above stated conductive body 3010 will be explained in detail in a latter portion and one end of the conductive body 3010 of the electric power line 12A is connected to a short detection circuit 230 of FIM 5 and another end presents an open state at the vicinity closed by the connector 17A.

Similar to, one end of the conductive body 3010 of the electric power line 12B is connected to the short detection circuit 230 of BCM 14, one end of the conductive body 3010 of the electric power line 12C is connected to a short detection circuit 230 of BCM 14, one end of the conductive body 3010 of the electric power line 12D is connected to a short detection circuit 330 of RIM 29, one end of the conductive body 3010 of the electric power line 12E is connected to the short detection circuit 330 of RIM 29, one end of the conductive body 3010 of the electric power line 12F is connected to the short detection circuit 230 of BCM 14, one end of the conductive body 3010 of the electric power line 12G is connected to the short detection circuit 230 of BCM 14, and one end of the conductive body 3010 of the electric power line 12H is connected to the short detection circuit 130 of FIM 15, respectively.

Other ends of all of the electric power lines 12A, 12B, 12C, 12D, 12E, 12F, 12G and 12H present an open state at the vicinity closed by the respective connectors. Hereinafter, this conductive body 3010 is called as a short sensor.

On the other hand, the electric power line 3020 starts from FIM 5 stated in above is connected to return with the loop shape via the electric power line 12A, the connector 17A, the electric power line 12B, BCM 14, the electric power line 12C, the connector 17B, the electric power line 12D, RIM 29, the electric power line 12E, the connector 17C, the electric power line 12F, BCM 14, the electric power line 12G, the connector 17D, and the electric power line 12H.

The electric power lines 12A - 12H wired with the loop shape stated in above supply the power to the respective electric loads 190, 290 and 390 which are connected to the respective modules through the respective power supply shutdown circuits 110, 210 and 310 of the respective modules FIM 5, BCM 14 and RIM 29 and the respective load drive circuits (the driver circuits) 160, 260 and 360 of the respective modules FIM 5, BCM 14 and RIM 29.

Further, to other modules DDM 18 and PDM 20, the power is supplied through the power supply supplying circuit 200 from the electric power lines 12B and 12G closed by the power supply among the electric power lines which are connected to the load power supply shutdown circuit 210 of BCM 14.

To A/C 16, SDM 25 and a radio 15, a backup power supply is supplied from the power supply supplying circuit 200 of BCM 14 through the electric power line 50f. In addition to the load use electric power lines stated in above, from the battery 3 to the control system use power supply is supplied to FIM 5, BCM 14 and RIM 29.

To the control system power supply circuit 120 of FIM 5, via the fuse 4c, the power supply is supplied to the control system use power supply circuit 320 of RIM 29 via the fuse 4d.

Accordingly, since the power supply supplying to the control systems is carried out another system, even one of the modules becomes the fail, the other modules can be operated.

The above stated power bus 12 supplies the power to the electric loads which are called as a body electric component system or the equipment system such as the control of the kinds of the head lamp, the stop lamp, the warning lamp, the power window, the door lock.

Through another system with the above stated body equipment system power supply supplying system, the power is supplied to the injector for controlling the fuel injection amount and the ignition apparatus for controlling the ignition timing, an engine control module (ECM) for controlling the throttle valve opening degree, an automatic transmission (ATM) for carrying out the engine transmission, and a power train system power train control module (PCM), from the battery 3 via the fusible link 4a, the ignition switch 26a, the fuse 36b which are arranged in the vicinity of the dashboard, and the electric power line 50b.

The power is supplied to ABS control unit 11 via the fusible link 4a, the ignition switch 26a, the fuse 36a in the fuse box 36, and the electric power line 50a. The power is supplied to the air bag control unit SDM 25 via the fusible link 4a, the ignition switch 26a, the fuse 36c in the fuse box 36, and the electric power line 50c.

The power is supplied to the radio 15 via the fusible link 4a, the accessory switch 26b, the fuse 36d in the fuse box 36, and the electric power line 50d. The power is supplied to A/C unit 16 from the battery 3 via the fusible link 4a, the accessory switch 26b, and the fuse 36e in the fuse box 36.

Accordingly, every the control system having the separate function each, the separate system power supply system is formed, even one of the power supply systems becomes the fail, any affect is not given to the other power supply systems.

BCM 14 has the power supply supplying circuit 200, this power supply supplying circuit 200 is connected to the electric power lines 12B and 12G through the electric power lines 210b and 210g. Since the power is supplied to the radio 15, SDM 25, A/C 16 through the accessory switch 26b or the ignition switch 26a, when the accessory switch 26b or the ignition switch 26a presents an "off" state, the power is not supplied.

In this time, to back-up the data during the operation, even when the accessory switch 26b or the ignition switch 26a presents an "off" state, it is necessary to supply the power supply.

Accordingly, the power for backing-up the data of these data is supplied from the power supply supplying circuit 200 of BCM 14 through the electric power line 50f. Since the data back-up use power supply is can be obtained by the power bus 12, it is unnecessary to provide the another back-up use separate electric power line and the fuse.

Further, these power bus systems 12A - 12H become to obstacle and the back-up data is eliminated, when the radio 15 and SDM 25, and A/C unit 16 are supplied to the power through the accessory switch 26b and the ignition switch 26a, the operation is constituted to start with the initial value, the fatal trouble is not occurred.

The body electric component system module FIM 5, BCM 14, RIM 29, DDM 18 and PDM 20 has respectively the communication circuits 140, 240, 340, 640 and 540, and between the respective communication circuits is connected by the multiple communication line 30.

Since the respective modules receives and sends mutually the input and/or output information which relates to the whole vehicle for example such as the condition of the ignition switch is inputted to BCM 14, according to the input signal which is taken into one module, the load which is provided to the another separate module can be drive-controlled.

To DDM 18 and PDM 20, the power is supplied via from the power supply sullying circuit 200. For these responses, the power supply circuit 500 and the power supply circuit 620 of the power supply circuit 520 of DDM 18 and the power supply circuit 620 of PDM is connected to respectively to the power supplying circuit 200 of BCM 14.

The load group 290 which is connected to BCM 14 is received the power through an output circuit (a driver circuit) 260. The output circuit 260 is connected to the power supply units 12c and 12f through the electric power lines 120c and 120f. The output controls 260 receives the control signal from a control signal output signal line group 270b of the control circuit 270 and drives and control the load.

The control circuit 270 output the load control signal to the output circuit 260 in accordance with the input signal which are inputted from the input circuit 250 and the input interface of the communication circuit 240, the ignition switch signal, the accessory switch signal and the receipt signal.

BCM module 14 has a short detection circuit 230 and monitors a short abnormality of the electric power lines 12B, 12C, 12F and 12G. With the short detection circuit 230, for example, when a short abnormally of the electric power line 12F is detected, such a signal is inputted into the control circuit 270, through an output signal line 270a the load power supply shutdown circuit 210 is driven, and an end portion of the power supply section 12F having the short abnormality is contacted and separated.

In this time, the control circuit 270 sends a signal which specifies the electric power line section having the short abnormality to other modules through the communication circuit 240. A predetermined module RIM 29 which has received the above stated signal controls a self load circuit 310 to separate the electric power line 12E which relates to the short abnormality through the self control circuit 370.

Accordingly, the section 12F having the short abnormality and the electric power line 12E which is connected to the section 12F through the connector 17C are separated from the loop shape electric power line, after that according to the tree connection line which are comprised of the main line having the electric power lines 12A, 12B, 12C and 12D and the sub-lines 23, 24 and 50f which are wired from the power supply circuit 200 of BCM module 14, the power is supplied to the respective loads.

FIM module 5 has a short detection circuit 130 and monitors a short abnormality of the electric power lines 12A an 12H. With the short detection circuit 130, for example, when a short abnormally of the electric power line 12A is detected, such a signal is inputted into the control circuit 170, through an output signal line 170a the load power supply shutdown circuit 110 is driven, and an end portion of the electric power line section 12A having the short abnormality is contacted and separated.

In this time, the control circuit 170 sends a signal which specifies the electric power line section having the short abnormality to other modules through the communication circuit 140.

The control circuit of BCM module 14 which has received the above stated signal drives the load power supply shutdown circuit 210 through the output signal line 270a and accordingly another end portion of the electric power line 12B which is connected through the electric power line 12A and the connector 17A is released.

Under the above stated condition, to the respective loads, according to the tree connection line which are comprised of the main line having the battery 3, the fuse 4e, the load power supply shutdown circuit 110 of FIM module 5, the electric power lines 12H and 12G, and the load shutdown circuit 310 having BCM module 14, and the sub-lines 23, 24 and 50f which are wired from the power supply circuit 200 of BCM module 14, the power is supplied to the respective loads.

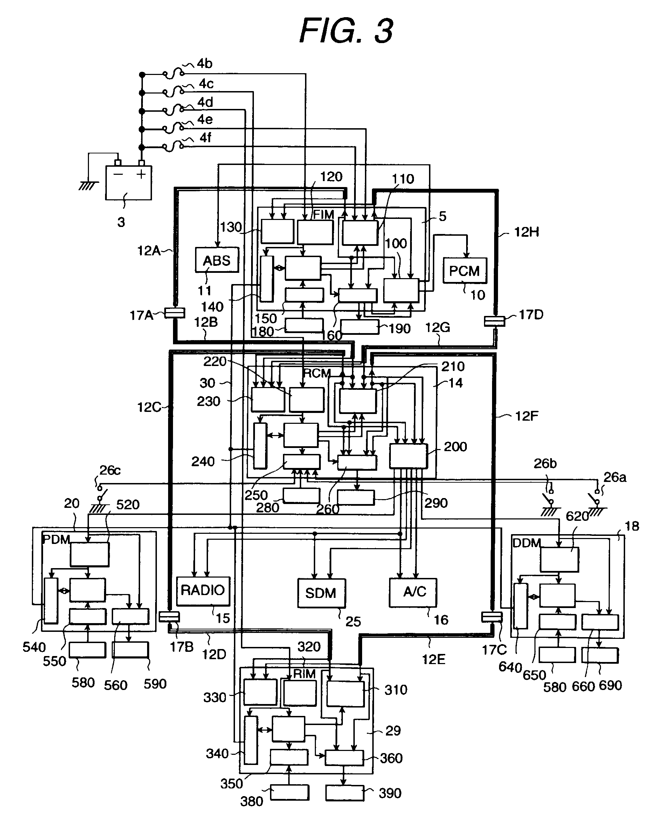

Fig. 3 shows a construction of another embodiment. The portions which differ from the construction shown in Fig. 2 will be explained.

In Fig. 2, the separate system power supply system which has the separate function except for the body electric component system is shown, however in the embodiment shown in Fig. 3, the power supply supplying to the power train control module (PCM) 10 and ABS control unit 11 is carried out from the power supply supplying circuit 100 of FIM 5 which is arranged in the same engine room and to the radio 15 and the SDM 25, and A/C unit 16, the power supply is supplied from the power supply supplying circuit 100 of BCM 14 which is arranged in the same cabin.

As stated in above, it can be dispensed with the fuses 36a, 36b, 36c, 36d and 36e shown in Fig. 2 which are connected in parallel to the respective power supply supplying line, the electric power line between from the battery 3 and the respective modules is passed through from the battery 3 which is arranged in the engine room to the ignition key which is arranged in the cabin, the fuse box, however the electric power line is connected closed by FIM 5 and BCM 14, the electric power line can be shortened and a number of the electric power lines can be deleted.

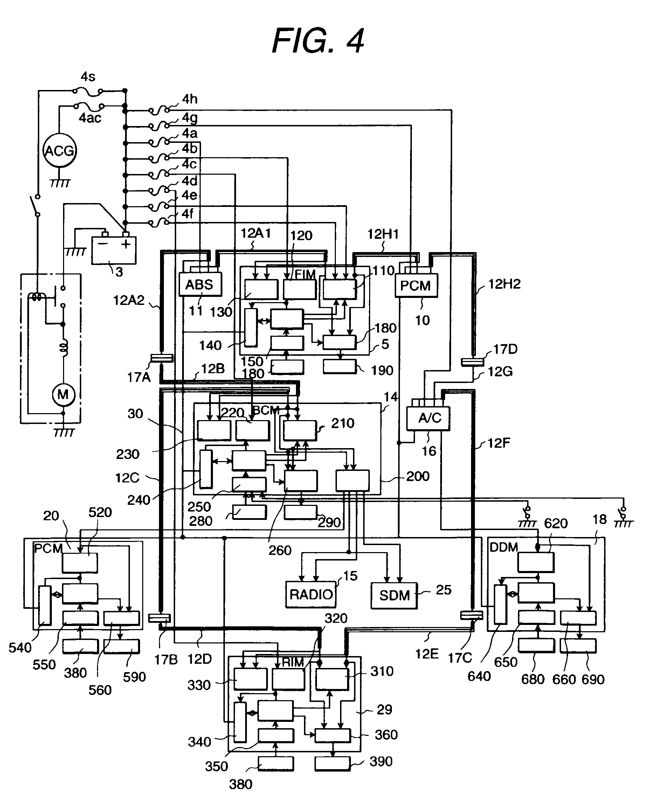

Fig. 4 shows a construction of a further embodiment. The portions which differ from the construction shown in Fig. 2 will be explained.

In Fig. 2, the modules which is connected to the power bus 12 are three which are FIM 5, BCM 14 and RIM 9, in Fig. 4, the power train control module (PCM) 10 which is the control system module having the separate function except for the body electric component system, ABS control unit 11, and A/C unit 16 are connected to the power bus 12.

Accordingly, the power bus is comprised of FIM 5, an electric power line 12A1, ABS 11, an electric power line 12A2, a connector 17A, the electric power line 12B, BCM 14, the electric power line 12C, a connector 17B, the electric power line 12D, RIM 29, the electric power line 12E, a connector 17C, the electric power line 12F, A/C unit 16, the electric power line 12G, a connector 17D, an electric power line 12H2, PCM 10, an electric power line 12H1, FIM 5.

Further, to the power train control module (PCM) 10, ABS control unit 11, A/C unit 16, the control system power supply is supplied through the respective fuse 4g, the fuse 4a, the fuse 4h and further the multiple communication line 30 is connected. The power supply supplying to DDM is altered from BCM 14 to A/C unit 16.

As stated in above, it can be dispensed with the fuses 36a, 36b, 36c, 36d and 36e shown in Fig. 2 which are connected in parallel to the respective power supply supplying line, the electric power line between from the battery 3 and the respective modules is passed through from the battery 3 which is arranged in the engine room to the ignition key which is arranged in the cabin, the fuse box, however the electric power line is connected closed by FIM 5 and BCM 14, the electric power line can be shortened and a number of the electric power lines can be deleted.

Further, in comparison with the structure shown in Fig. 3, the power supply supplying circuit to FIM 5 and BCM 14 can be simplified.

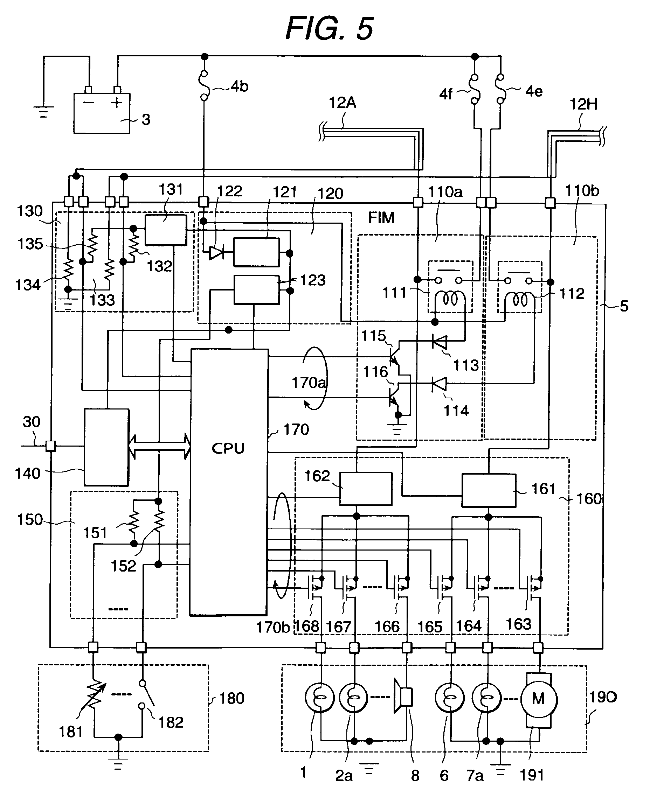

Fig. 5, Fig. 6, Fig. 7, Fig. 8, and Fig. 9 are the constructions of the embodiment shown in Fig. 2.

The expression of a semiconductor switching element which is stated in the drawing of the present specification hereinafter, in a convenience for the explanation, generally a symbol for indicating the transistor expresses a semiconductor switching element having no short protection function, and on the other hand a symbol for indicating MOSFET expresses a semiconductor switching element having a short protection function.

The construction of FIM 5 will be explained referring to Fig. 5. The load power supply shutdown circuit 110 shown in Fig. 2 is constituted by a first load power supply shutdown circuit 110a and a second load power supply shutdown circuit 110b.

The first load power supply shutdown circuit 110a is constituted by a relay 111 and a diode 113, and a semiconductor switching element 115.

The second load power supply shutdown circuit 110b is constituted with same of the first load power supply shutdown circuit 110a and is constituted by a relay 112 and a diode 114, and a semiconductor switching element 116.

In these relays 111, 112, when the current flows into the coil, then a contact present an "on" state and when the current is performed the shutdown, then the contact present an "off" state.

Since the operation and the detailed construction of the first and the second load power supply shutdown circuits 110a and 110b are same, it will be explained by the first load power supply shutdown circuit 110a.

According to the control signal from the control circuit 170, since the semiconductor switching element 115 is presented to the "on" state and the "off" state, a contact point of the relay 111 is presented to the "on" state and the "off" state.

In a case of non-existence of the diode 113, when the battery 3 is connected reversely, to the coil of the relay 111 a reverse current flows and the contact point of the relay 111 is presented to the "on" state without the relationship of the control signal, and then to the load the current flows in a reversal direction in a normal time of the load and an error operation is carried out, however by providing the diode 113, not to flow the reverse current to the coil of the relay 111, the contact point of the relay 111 is performed to carry out to present the "off" state.

As stated above, by the provision of the diode 113, even when the battery 3 is reversely connected, since the relay presents the "off" state, since the current passage line of the load is performed the shutdown, the error operation in which the load is operated and is continued can be prevented.

The power supply supplying to the coil of the relay 111 is connected to the control system power supply explained in Fig. 2, on an end portion of the contact point of the relay 111 is connected to the battery 3 through the fusible link 4f and another end portion is connected to the loop system power supply supplying system electric power line 12A, at the same time it is connected to the output circuit 160 for supplying the power supply supplying to the load.

As stated in above, the power supply to the coil of the relay 111 is carried out from the control system power supply and further the power supply supplying to the control 170 for outputting the control signal of the coil, even if the power bus 12 is carried out the fail, and the control of the relay 111 is carried out and accordingly the shutdown and connection of the first load power supply shutdown circuit 110a can be carried out.

Further, it is unnecessary to operate the load and when the current is tried to reduce etc., the current for flowing the relay 111 is performed the shutdown, since the power supply for supplying the load can be performed the shutdown, the consumption current can be lessened.

Further, in reversely, when the control system power supply becomes the fail, the current of the relay 111 is performed the shutdown, the load power supply shutdown circuit 110a is performed the shutdown, and since the power supply is supplied to the load, even if the control circuit is carried out the error operation, all of the loads become to present to a stop condition and then the error operation can not be carried out.

The output circuit 160 is constituted by semiconductor switching elements 163 - 168 which carry out the drive control by supplying the power supply to the over-current detection circuits 161 and 162 and the loads. In this embodiment, as the semiconductor switching elements 163 - 168 power MOSFET which is installed an over-temperature detection shutdown function in an interior portion is used, and when the over-current flows and the temperature of the element becomes to more than a predetermined temperature, it presents to an "off" state.

Accordingly, even the load becomes the short, the current does not continue to flow, and further the harness is invited the smokes and the fuse is broken down, further the battery does not present the over-discharge.

Only six semiconductor switching elements are shown in the figure, naturally the number of the elements can be increased and decreased according to the loads which are connected to FIM 5.

To the semiconductor switching elements 163, 164 and 165, a washer motor 191, a turn lamp right 7a, and a head lamp right 6 which are arranged respectively at a right side of a vehicle of the load 190 which is connected to FIM 5. To the semiconductor switching elements 166, 167 and 168, a horn 8, a turn lamp left 2a, and a head lamp left 1 which are arranged respectively at a right side of a vehicle of the load 190 which is connected to FIM 5.

Further, other ends of the semiconductor switching elements 163, 164 and 165 are connected to the over-current detection circuit 161 and to another end of an upstream of the over-current detection circuit 161, the power supply is supplied from the second load power supply shutdown circuit 110b.

The other ends of the semiconductor switching elements 166, 167 and 168 are connected to an over-current detection circuit 162 and to another end of an upstream of the over-current detection circuit 162 the power supply is supplied from the first load power supply shutdown circuit 110a.

As stated in above, in the right side and the left side of the vehicle the separate systems are formed, even any one of the separate systems becomes the fail, another separate system can be operated. Herein, the reason why the separate system is formed at the right side and at the left side is that to FIM 5, many loads constituted one pair at the right side and the left side, for example, the head lamp, the fog lamp, the clearance lamp etc. are connected.

For example, when the power supply is supplied to the head lamp right and the head lamp left according to the same power supply system and when the over-current detection circuit of this power supply system becomes the fail and the power supply is not supplied, since the head lamps at the right side and the left side is righted out, it is very danger during a night running.

However, as shown in this embodiment, since the two separate systems are constituted at the right side and the left side, since one of the head lamps is righted on, then the worst circumstance can be avoided.

The control system power supply circuit 120 is constituted by a diode 122, a constant voltage power supply circuit 121, and a power supply shutdown circuit. The control system power supply which is supplied from the battery 3 through the fuse 4b supplies to the constant voltage power supply circuit 121 via the diode 122.

In the constant voltage power supply circuit 121, it is generated a constant voltage which operates the control circuit 170 for carrying out the various kinds executions and the control processing. This voltage is supplied to a voltage application drive circuit 131 of the short detection circuit 130 and the control 170, the communication circuit 140, and the power supply shutdown circuit 123.

In the power supply shutdown circuit 123, according to the control signal of the control circuit 170, the constant voltage power supply which is supplied from the constant voltage power supply circuit 121 is supplied and is performed the shutdown to the input circuit 150.

The input circuit 150 converts the signal of the atmospheric temperature sensor 181 of the input signal 180 and the brake liquid amount sensor 182 etc. to the voltage in which the above stated signal is taken into the control circuit 170.

Accordingly, by resistors 151 and 152, it is carried out to a pull-up. However, when the man does not ride on the vehicle and the vehicle is left alone, according to the information from the brake liquid amount sensor 182 and the atmospheric temperature sensor 181, in regardless of the necessity for alarming the alarm etc., via the pull-up resistors 151 and 152, when the current flows into the brake liquid amount sensor 182 and the atmospheric temperature sensor 181, the battery 3 is discharged and then the battery 3 comes to an end.

Accordingly, in a case of the unnecessity, the power supply for supplying to the pull-up resistors is performed the shutdown according to the power supply shutdown circuit 123.

The short detection circuit 130 is constituted by a voltage application drive circuit 131, pull-up resistors 132 and 135, and pull-down resistors 133, 134 to the ground. The voltage application drive circuit 131 carried out to an "on" state and an "off" state of the power supply supplying to the pull-up resistors 132 and 135 according to the control signal of the control circuit 170.

The pull-up resistor 132 and another end of the pull-down resistor 133 are connected to an outside of FIM 5 through a connection use connector for the outside of FIM 5 and further are connected to a short sensor of the electric power line 12H.

Further, in an interior portion of FIM 5, the control signal is inputted to the control circuit 170. Similarly to the pull-up resistor 135 and another end of the pull-down resistor 134 are connected to an outside of FIM 5 through a connection use connector for the outside of FIM 5 and further are connected to a short sensor of the electric power line 12A.

Further, in an interior portion of FIM 5, the control signal is inputted to the control circuit 170. Further, in an interior portion of FIM 5, the control signal is inputted to the control circuit 170.

As stated in above, the reason why the pull-up resistor 135 and another end of the pull-down resistor 134 are connected to the outside of FIM 5 through a connection use connector for the outside of FIM 5 is as following.

As stated in above, since the another end of the short sensor becomes the open state, commonly the current does not flow into the short sensor. In this case, since the current does not flow into the connection use connector, the connection portion is oxidized and there is a possibility of a contact fail.

Accordingly, with construction in this embodiment, since to the connector the current flows through a rout passage comprised of the pull-up resistor 135, the two connection connectors, the pull-down resistor 134, the oxidation can be prevented. The operation will be explained in detail in a latter portion.

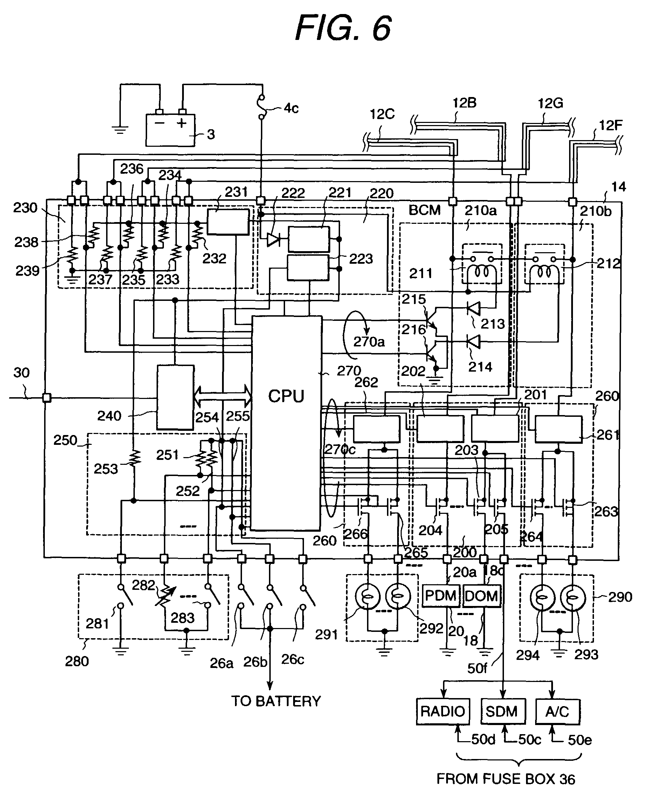

Fig. 6 is a construction view of BCM 14. The first load power supply shutdown circuit 210a shown in Fig. 2 and the second load power supply circuit 201b have the same constructions of the first load power supply shutdown circuit 110a shown in Fig. 2 and the second load power supply circuit 110b.

The power supply supplying of a coil of a relay 211 is connected to the control system power supply and one end of a contact of the relay 211 is connected to the loop system power supply supplying system electric power line 12B and another end is connected to the loop system power supply supplying system electric power line 12C and the same time both ends are connected to the power supply supplying circuit 200 for supplying the power supply to the loads or the output circuit 260.

The output circuit 260 and the power supply supplying circuit 200 have the differ names however since the function, the construction are the same, it will be explained simultaneously.

The output circuit 260 and the power supply supplying circuit 200 are constituted by the over-current detection circuits 261, 262, 201 and 202 and the semiconductor switching elements 263-266, 203 and 204 for carrying out the drive by supplying the power supply to the loads.

In this embodiment, as the semiconductor switching elements 263-266, 203 and 204, the power MOSFET to which the over-temperature detection shutdown function is installed is used, and when the over-current flows and the temperature of the element becomes more than a predetermined temperature, it presents to an "off" state.

Accordingly, even the load becomes the short the current does not to continue to flow, and further the harness is invited the smokes and the fuse is broken down, further the battery does not present the over-discharge.

Only six semiconductor switching elements are shown in the figure, naturally the number of the elements can be increased and decreased according to the loads which are connected to FIM 5.

To the semiconductor switching elements 263 and 264, the room lamps 293 and 294 of the load which are connected to BCM 14 respectively. To another end of the semiconductor switching elements 265 and 266, warning lamps 291 and 292 which are arranged an instrument panel of the load 290 which is connected to BCM 14 are connected.

To the semiconductor switching element 203, DDM 18 which is arranged to the driver seat door and to the semiconductor switching element 204, PDM 20 which is arranged to the passenger seat door.

Further, other ends of the semiconductor switching elements 263 and 264 are connected to the over-current detection circuit 261 and to another end of an upstream of the over-current detection circuit 261, the power supply is supplied from the second load power supply shutdown circuit 110b from the electric power line 12F.

The other ends of the semiconductor switching elements 265 and 266 are connected to an over-current detection circuit 262 and to another end of an upstream of the over-current detection circuit 262 the power supply is supplied from the first load power supply shutdown circuit 110a from the electric power line 12C.

The other ends of the semiconductor switching element 203 is connected to the over-current detection circuit 261 and to another end of an upstream of the over-current detection circuit 201 the power supply is supplied from the first load power supply shutdown circuit 110a from the electric power line 12G.

The other ends of the semiconductor switching element 204 is connected to the over-current detection circuit 202 and to another end of an upstream of the over-current detection circuit 202 the power supply is supplied from the first load power supply shutdown circuit 210a from the electric power line 12B.

As stated in above, in the right side and the left side of the vehicle the separate systems are formed, even any one of the separate systems becomes the fail, another separate system can be operated.

The control system power supply circuit 220 has the same construction and the same operation with the control system power supply circuit 120 of FIM 5 shown in Fig. 5. The input circuit 250 converts the signals from the intermittent wiper volume 282 of the input signal 280, the wiper switch 283, the light switch 281, and the ignition key switch (not shown in Fig. 6) etc. to the voltage in which the above stated signals are taken in the control circuit 270.

Accordingly, the pull-up function is added by the resistors 251, 252 and 253. According to the input signals of the intermittent wiper volume 282 and the wiper switch 283, since the load to be controlled operates necessarily only when the ignition switch is presented to the "on" state, when the man does not exist in the vehicle and the vehicle is left alone, since it is unnecessary to take in the information, the power supply which is supplied to the pull-up resistors 251 and 252 is shutdown by the power supply shutdown circuit 123.

On the other hand, when the man does not exist in the vehicle and the vehicle is left alone, since the light switch 281 and the ignition switch etc. are suddenly presented to the "on" state, and due to fact since it is necessary to drive the load, even when the man does not exist in the vehicle and the vehicle is left alone, it is necessary always to detect the input condition.

Accordingly, the power supply supplying of the pull-up resistor 253 is connected to the output of the constant voltage power supply circuit 221 in which the power supply supplying is carried out always.

The short detection circuit 230 is connected to four short sensors of the electric power line 12B, the electric power line 12C, the electric power line 12F, and the electric power line 12G.

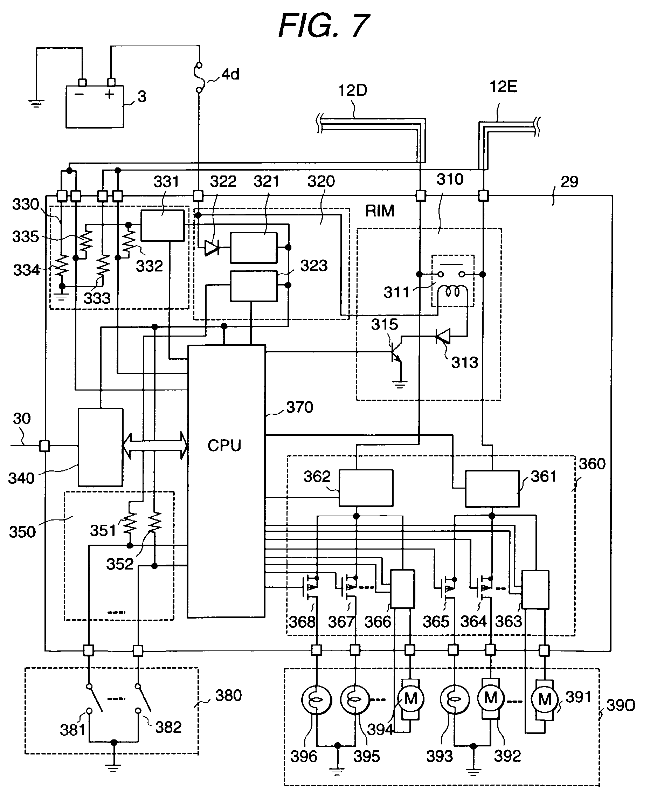

Fig. 7 is a construction view of RIM 29. The construction of the load power supply shutdown circuit 310 is the same construction of the construction of the load power supply shutdown circuit 110a of FIM 5 shown in Fig. 5 and the power supply supplying of a relay 311 to a coil is connected to the control system power supply explained in Fig. 2.

A contact of the relay 311 is connected to the loop system power supply supplying system electric power line 12D and another end is connected to the loop system power supply supplying system electric power line 12E and at the same time the both two ends are connected to the output circuit 360 for supplying the power supply to the loads.

The output circuit 360 is constituted by semiconductor switching elements 364 - 368 which carry out the drive control by supplying the power supply to the over-current detection circuits 361 and 362 and the loads.

In this embodiment, as the semiconductor switching elements 364, 365, 367 and 368, the power MOSFET which is installed an over-temperature detection shutdown function in an interior portion is used, and when the over-current flows and the temperature of the element becomes to more than a predetermined temperature, it is presented to an "off" state.

Accordingly, even the load becomes the short, the current does not continue to flow, and further the harness is invited the smokes and the fuse is broken down, further the battery does not present the over-discharge.

Only six semiconductor switching elements are shown in the figure, naturally the number of the elements can be increased and decreased according to the loads which are connected to RIM 29.

To the semiconductor switching elements 363, 364 and 365, a power window motor 391 of a rear seat right side door of the load 390 is connected to RIM 29, a fuel pump 392 which is arranged at a right side of the trunk room, a stop lamp right 393 etc. are connected. To the semiconductor switching elements 366, 367 and 368, a power window motor 394 of a rear seat left side door of the load 390 is connected to RIM 29, a fuel pump 395 which is arranged at a left side of the trunk room, and a stop lamp left 396 etc. are connected.

Further, other ends of the semiconductor switching elements 363, 364 and 365 are connected to the over-current detection circuit 361 and to another end of an upstream of the over-current detection circuit 361, the power supply of the load power supply shutdown circuit 310 is supplied from the electric power line 12D.

The other ends of the semiconductor switching elements 166, 167 and 168 are connected to an over-current detection circuit 162 and to another end of an upstream of the over-current detection circuit 162 the power supply of the load power supply shutdown circuit 310 is supplied from the electric power line 12D.

As stated in above, in the right side and the left side of the vehicle the separate systems are formed, even any one of the separate systems becomes the fail, another separate system can be operated.

Herein, the reason why the separate system is formed at the right side and at the left side is that to RIM 29, many loads constituted one pair at the right side and the left side, for example, the stop lamp, the table lamp etc..

For example, when the power supply is supplied to the stop lamp left 396 and the stop lamp right 393 according to the same power supply system and when the over-current detection circuit of this power supply system becomes the fail and the power supply is not supplied, since the stop lamps at the right side and the left side is righted out during the brake, it is very danger.

However, as shown in this embodiment, since the two separate systems are constituted at the right side and the left side, one of the head lamps is righted on the worst circumstance can be avoided. The semiconductor switching elements 363 and 366 is H bridge circuit which drives the motor toward the both normal and reverse directions, such a construction will be explained in a latter portion.

The control system power supply circuit 320 has the same construction and the same operation with the control system power supply circuit 120 of FIM 5 shown in Fig. 5. The input circuit 350 converts the voltage in which the control circuit 370 takes in the signals from the door opening and closing switch 382 of the input signal 380 and the rear seat power window switch 383 etc..

Accordingly, the resistors 351 and 352 are formed to make the pull-up. When the man does not exist in the vehicle and the vehicle is left alone, since it is unnecessary to take in the information, the power supply which is supplied to the pull-up resistors 351 and 352 is shutdown by the power supply shutdown circuit 323.

The short circuit 330 is connected to two short sensors of the electric power line 12D and the electric power line 12E.

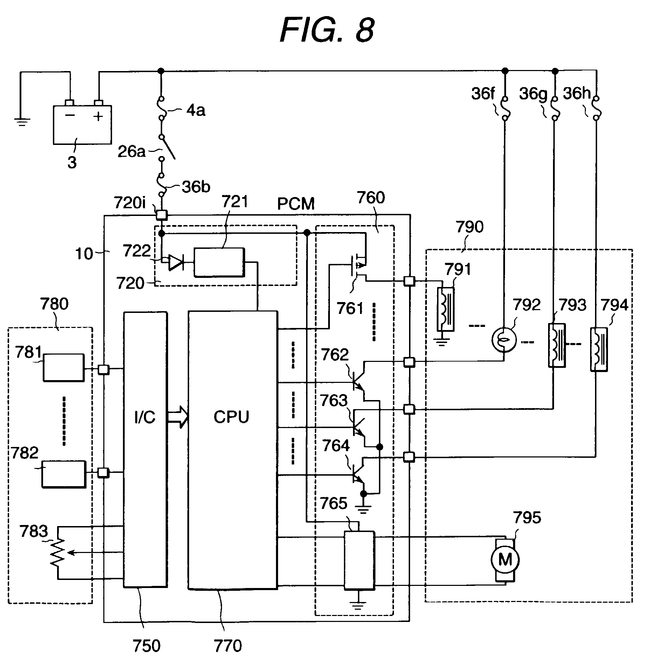

Fig. 8 is the construction of PCM 10 in which the power supply is supplied according to another system against the loop shape power supply supplying system. PCM 10 according to embodiment shown in Fig. 2 is constituted by a power supply circuit 720, a control circuit 770, an input circuit 750, and an output circuit 760.

The power supply circuit 720 is constituted by a diode 722, and a constant voltage power supply circuit 721. the power supply which is supplied from the battery 3 via the fuse 4a, the ignition switch 26a, and the fuse 36b is supplied to the constant voltage power supply circuit 721 via the diode 722, on the other hand as the load drive use power supply the power supply is supplied to the semiconductor switching elements 761 and 765 of the output circuit 760.

In the constant voltage power supply circuit 721, the constant voltage which operates the control circuit for carrying the various kinds executions, the control processing etc. is generated. The input circuit 750 converts to the voltage in which the control circuit 770 takes into the signals from the crank angle sensor 781, the air flow sensor 782, and the throttle sensor 783, etc..

The output circuit 760 is constituted by semiconductor switching elements 761 and 765 which carry out the drive control by supplying the power supply to the loads and semiconductor switching elements 762, 763 and 765 which carry out the "on" and "off" operations of the loads.

In this embodiment, as the semiconductor switching element 765, the power MOSFET which is installed an over-temperature detection shutdown function in an interior portion is used, and when the over-current flows and the temperature of the element becomes to more than a predetermined temperature, it is presented to an "off" state.

Accordingly, even the load becomes the short, the current does not continue to flow, and further the harness is invited the smokes and the fuse is broken down, further the battery does not present the over-discharge.

On the other hand, as the semiconductor switching elements 762, 763 and 765 a simple semiconductor switching element is used. Because, the load becomes the short and the current flows, since the fuse which is arranged at the upstream of the load is welded, the over current does not continue to flow.

In this embodiment, the semiconductor switching element having no protection function is used, naturally there is no problem in which the semiconductor switching element having the protection function is used.

Only five semiconductor switching elements are shown in figure, naturally a number of the semiconductor switching element can be increased and decreased by the loads which are connected to PCM 10.

To the semiconductor switching elements 762, 763 and 764, a warning lamp 792 of the load 790 which is connected to PCM 10, an injector 793, the EGR solenoid 794 are connected, and at the upstream of these elements the fuses 36f, 36g and 36h are connected. To the semiconductor switching element 761, AT solenoid 791 of the load 790 which is connected to PCM 10 etc. are connected.

The semiconductor switching element 765 is H bridge circuit which drives the motor toward the both normal and reverse directions, such a construction will be explained in a latter portion.

Similarly to PCM 10, ABS 11, the separate system with the loop shape power supply supplying system shown in Fig. 2, the explanation about of the constructions of ABS 11, A/C 16, SDM 25, the radio 15 are substantially to the same of PCM 10 shown in Fig. 8 will be omitted, naturally the input signals and the loads which are connected to the modules differ.

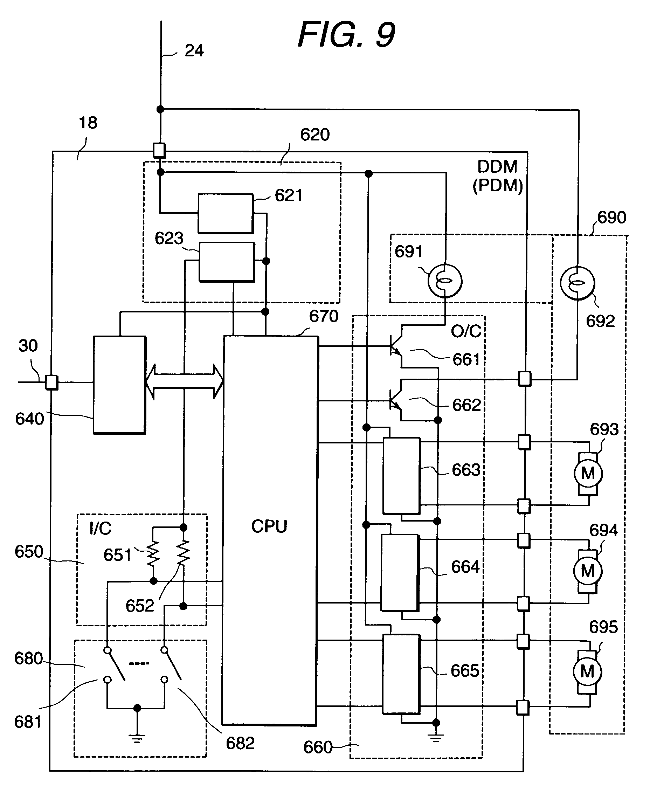

Fig. 9 shows a construction view of DDM 18 in which the power supply is supplied to from the power supply supplying circuit 200 of BCM 14.

DDM 18 is constituted by a power supply circuit 620, a communication circuit 670, and a part of an output circuit 660 and a part of the loads 690.

The power supply circuit 620 is constituted by a constant voltage power supply circuit 621 and a power supply shutdown circuit 623. The power supply which is supplied from the constant voltage power supply circuit 621 and the power supply shutdown circuit 623.

The power supply which is supplied from the power supply supplying circuit 200 from BCM 14 is supplied to the constant voltage supply circuit 721 and one other hand, as the load use drive use power supply, to the switching elements 663, 664, and 665 and the load 691 is supplied.

In the constant voltage power supply circuit 621, the constant voltage for operating the various kinds executions and the control processing is generated. In the input circuit 650, it is converted to the voltage for taking into the signals from the power window switch 681 and the door lock switch 682.

Accordingly, these switches is not unnecessary to take into the information when the man does not exist in the vehicle and the vehicle is left alone, the power supply which is supplied to the pull-up resistors 651 and 652 is performed the shutdown according to the power supply shutdown circuit 621.

The output circuit 660 is constituted by semiconductor switching elements 663, 664 and 665 which carry out the drive control by supplying the power supply to the loads and semiconductor switching elements 661 and 662 which carry out the "on" and "off" operations of the loads.

In this embodiment, as the semiconductor switching elements 661 and 662, a simple semiconductor switching elements are used.

Accordingly, even when the load becomes the short, and the over-current flows, since the power supply supplying circuit 200 of BCM 14 has the protection function, the current does not continue to flow.

In this embodiment, the semiconductor switching element having no protection function is used and however there is no problem in which the semiconductor switching element having the no protection function is used.

The switching elements 663, 664 and 665 for driving the power window motor 693, the door lock motor 694, the mirror motor 695 use the relay, however the semiconductor switching element can be employed.

To the semiconductor switching element 661, a switch mirror lamp 691 of the load which is installed in the interior portion of DDM 18 is connected to, and to the semiconductor switching element 662, a step motor which is installed to the door is connected, and at the upstream of these loads the power supply supplying circuit 200 of BCM 14 is connected.

Since the construction of PDM 20 is substantially to the same of DDM 18 shown in Fig. 9, the explanation will be omitted.

As stated in above, since the power supply for DDM 18, PDM 20 and the loads which are installed on the door is supplied from the power supply supplying circuit having the protection function of BCM 14, as the power supply supplying wire it is unnecessary to use the coaxial structure wire shown such as Fig. 26, however an ordinary wire can be used.

Accordingly, the diameter of the wire can be formed thin. Further, as the semiconductor switching element used in the output circuit, it can be employed the element having no protection function.

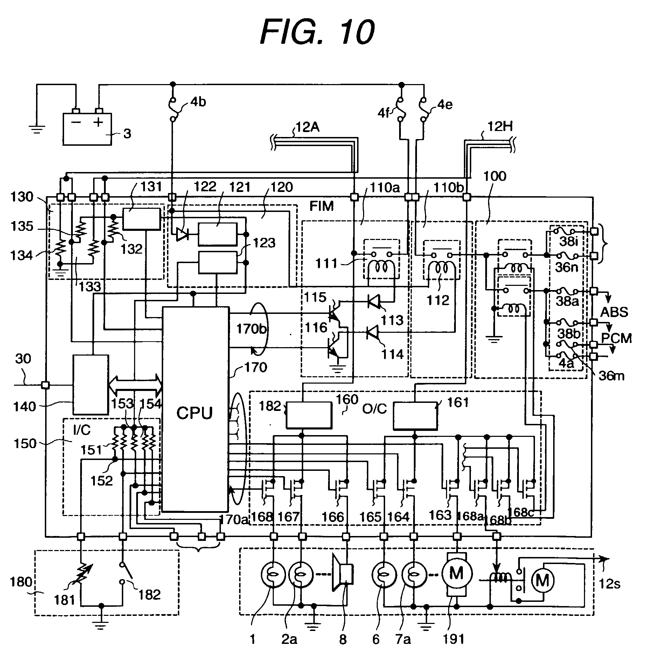

Fig. 10, Fig. 11 and Fig. 12 are construction views of FIM 5, BCM 14 and PCM 10 according to the embodiment shown in Fig. 3, however there are no changes in other modules RIM 29, DDM 18 and PDM 20 against the embodiment shown in Fig. 2.

The construction of FIM 5 according to the embodiment shown in Fig. 3 will be explained according to Fig. 10. Only the different points against to the construction of FIM 5 according to the embodiment shown in Fig. 5 will be explained.

In Fig. 2, the separate system power supply system having the separate function except for the body electrical component system is formed every the control system each, however the construction according to the embodiment shown in Fig. 3, the power supply to PCM 10 and ABS 11 is supplied from FIM 10 which is arranged in the same engine room. Accordingly, a power supply supplying circuit 100 is added against FIM 5 shown in Fig. 5.

The semiconductor switching element 102 of the power supply supplying circuit 100 receives the supply of the power supply via an over-current detection circuit 162 and controls the supply of the power supply against PCM 10, and the semiconductor switching element 101 receives the supply of the power supply via an over-current detection circuit 161 and controls the supply of the power supply against ABS 11.

As stated in above, it can be dispensed with the fuses 36a, 36b, 36c, 36d and 36e shown in Fig. 2 which are connected in parallel to the respective power supply supplying line, the electric power line between from the battery 3 and the respective modules is passed through from the battery 3 which is arranged in the engine room to the ignition key which is arranged in the cabin, the fuse box, however the electric power line is connected closed by FIM 5 and BCM 14, the electric power line can be shortened and a number of the electric power lines can be deleted.

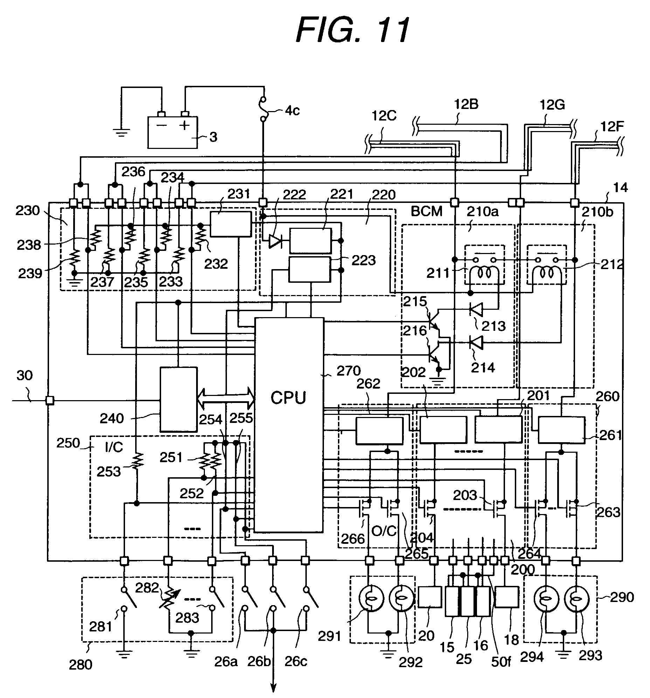

The construction of BCM 14 according to the embodiment shown in Fig. 3 will be explained according to Fig. 11. Only the different points against to the construction of BCM 14 according to the embodiment shown in Fig. 6 will be explained.

In Fig. 2, the separate system power supply system having the separate function except for the body electrical component system is formed every the control system each, however the construction according to the embodiment shown in Fig. 3, the power supply to the radio 15, SDM 25 and A/C 16 is supplied from BCM 14 which is arranged in the same cabin of the vehicle.

To the radio 15, SDM 25 and A/C 16, the supply of the power supply is controlled according to the semiconductor switching elements not shown in figure to the power supply supplying circuit 200.

As stated in above, it can be dispensed with the fuses 36a, 36b, 36c, 36d and 36e shown in Fig. 2 which are connected in parallel to the respective power supply supplying wire, the electric power line between from the battery 3 and the respective modules is passed through from the battery 3 which is arranged in the engine room to the ignition key which is arranged in the cabin, the fuse box, however the electric power line is connected closed by BCM 14, the electric power wire can be shortened and a number of the electric power lines can be deleted.

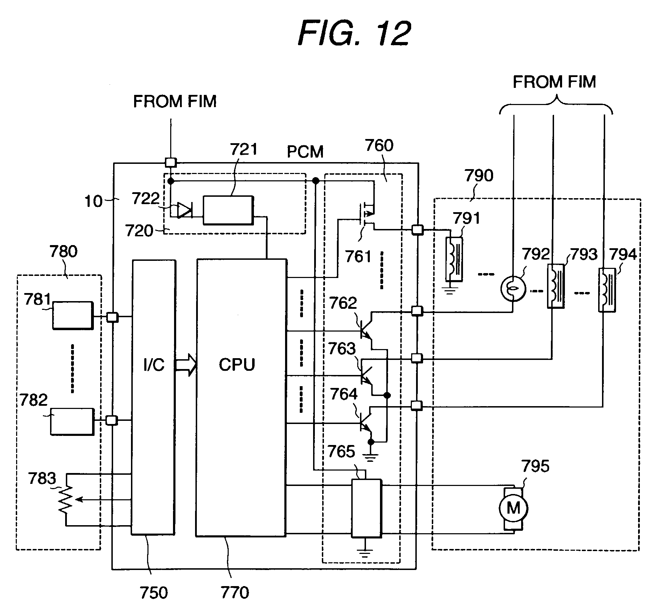

The construction of PCM 10 according to the embodiment shown in Fig. 3 will be explained referring to Fig. 12. The construction of PCM 10 is the same shown in Fig. 8, however the power supply supplying of PCM 10 and the loads is altered from FIM 5.

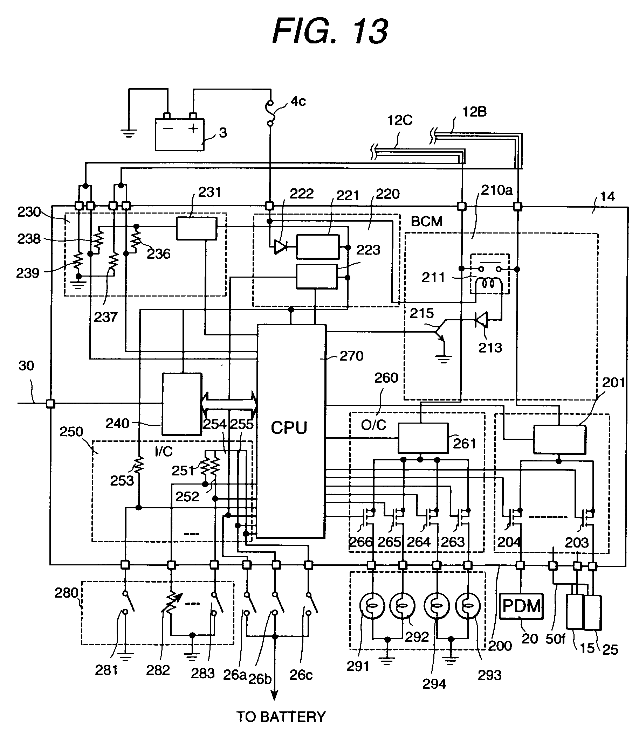

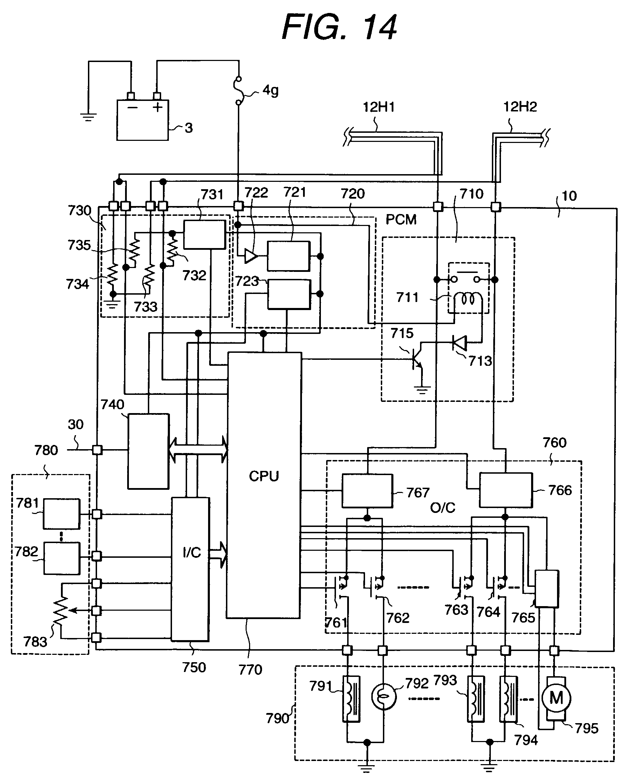

Fig. 13 and Fig. 14 are construction views of the modules BCM 14 and PCM 10 according to the embodiment shown in Fig. 4, however there are no changes in other modules FIM 5, RIM 29, DDM 18 and PDM 20 against the embodiment shown in Fig. 2.

The construction of SCM 14 according to the embodiment shown in Fig. 4 will be explained according to Fig. 13. Only the different points against to the construction of BCM 14 according to the embodiment shown in Fig. 6 will be explained.

In Fig. 2, the modules connected to the power bus 112 are three which are FIM 5, BCM 14, RIM 29, however in Fig. 4 the control modules having the separate function except for the body electrical component system which are PCM 10, ABS 11 and A/C 16 is connected to the power bus 12.

Accordingly, the electric power lines connected to BCM 14 are two which are the electric power line 12B and the electric power line 12C and the electric power line 12F, the electric power line 12G which are connected in the embodiment shown in Fig. 2 are connected to A/C 16.

In company with this variation, the connections of the short sensor become two from four and further the construction of the power supply supplying circuit 200 and the loads to be connected are slightly altered, however there are no alternations about the basic construction and the basic operation, the explanation will be omitted.

As stated in above, it can be dispensed with the fuses 36a, 36b, 36c, 36d and 36e shown in Fig. 2 which are connected in parallel to the respective power supply supplying line, the electric power line between from the battery 3 and the respective modules is passed through from the battery 3 which is arranged in the engine room to the ignition key which is arranged in the cabin, the fuse box, however the electric power line is connected closed by BCM 14, the electric power line can be shortened and a number of the electric power lines can be deleted.

Further, in comparison with the construction shown in Fig. 3, the power supply supplying circuit of BCM 14 can be simplified.

The construction of PCM 10 according to the embodiment shown in Fig. 4 will be explained referring to Fig. 14.

In Fig. 4, PCM 10 which is the control system module having the separate function except for the body system electric equipment system is connected to the power bus 12.

The construction of PCM 10 shown in Fig. 14 differs from the construction of RIM 29 which is connected to the power bus 12 as shown in Fig. 2 from the aspects of the input signals to be connected and the electric power lines, however the construction has basically the same construction. Accordingly, the detailed constructions and the operation explanation will be omitted.

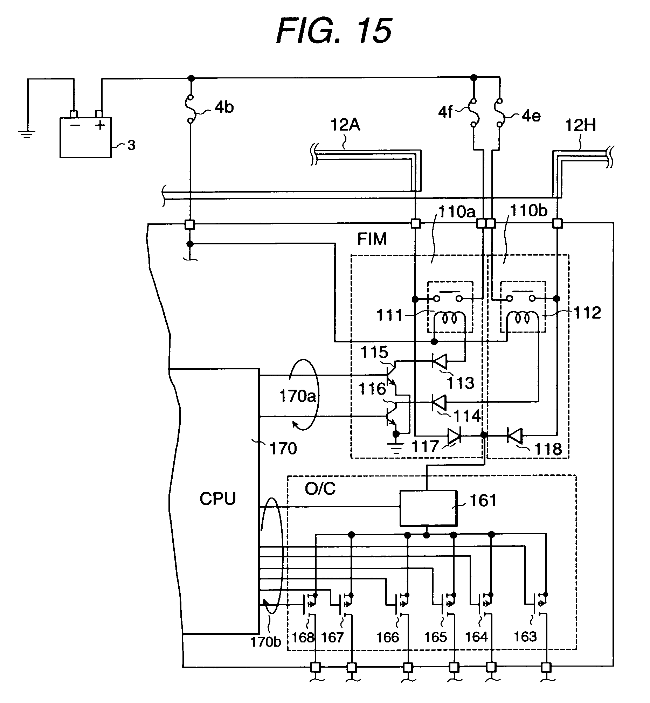

Fig. 15, Fig. 16 and Fig. 17 are other constructions of Fig. 5. Fig. 6 and Fig. 7 of the module FIM 5, BCM 14 and RIM 29 according to the embodiment shown in Fig. 2. In Fig. 5, Fig. 6 and Fig. 7, the power supply which is supplied from more than two electric power lines of the loop system power supply system which is connected to the module is supplied independently respectively to the loads.

However, in Fig. 15, Fig. 16, Fig. 17, the power supply which is supplied from more than two electric power lines of the loop system power supply system is supplied to the loads in the interior portion of the module by performing the diode logical AND.

In FIM 5 shown in Fig. 15, the power supply from the electric power line 12A and the electric power line 12H is supplied to the output circuit by performing the logical AND in a diode 117 and a diode 118.

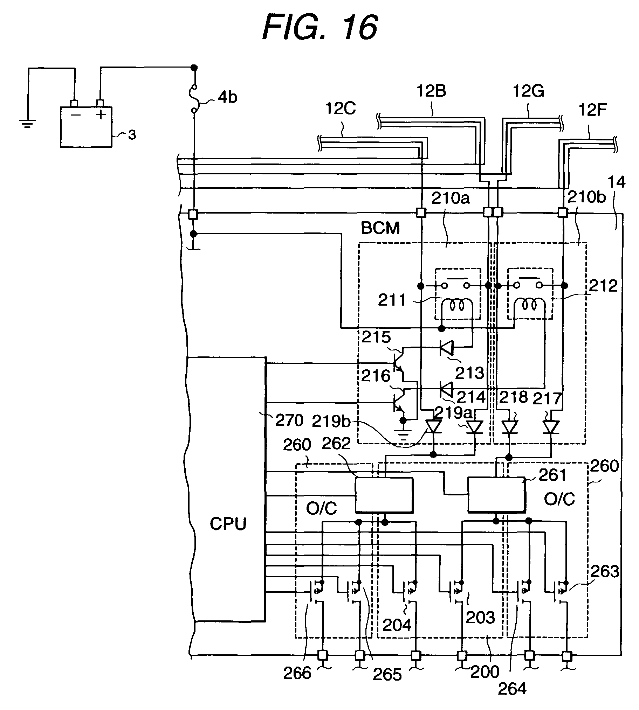

In BCM 14 shown in Fig. 16, the power supply from the electric power line 12B and the electric power line 12C is supplied to the output circuit by performing the logical AND in a diode 217 and a diode 218 and the power supply from the electric power line 12F and further the electric power line 12G is supplied to the output circuit by performing the logical AND in a diode 219a and a diode 219b.

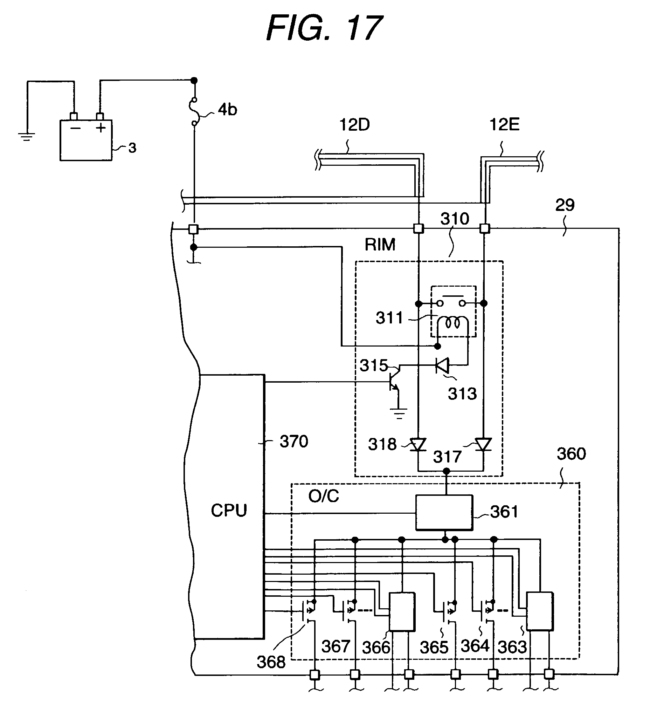

In RIM 29 shown in Fig. 17, the power supply from the electric power line 12D and the electric power line 12E is supplied to the output circuit by performing the logical AND in a diode 317 and a diode 318.

With the above stated constructions, since the number of the power supply supplying systems is reduced, the number of the over-current detection circuits which are disposed at a downstream can be deleted.

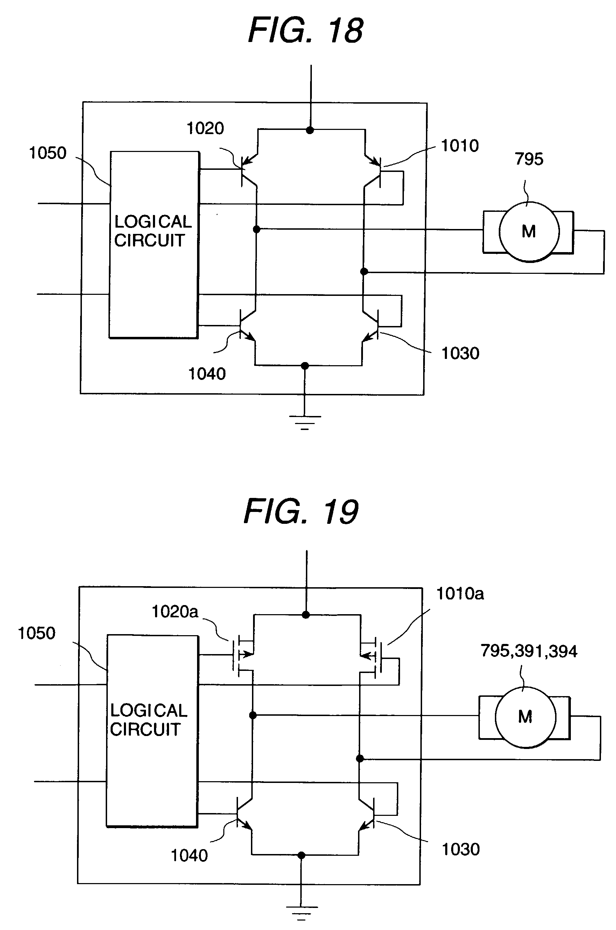

In Fig. 18, Fig. 19, Fig. 20 and Fig. 21, H bridge circuit for driving the motor in both directions of the normal rotation and the reversal rotation. First of all, the construction shown in Fig. 18 will be explained.

Under two control signals from the control circuit, a logical circuit 1050 converts to a control signal of H bridge which is constituted by four semiconductor switching elements 1010, 1020, 1030 and 1040 having no short protection function.

Namely, during the normal rotation, the semiconductor switching elements 1020 and the semiconductor switching elements 1030 are presented to the "on" state and to a motor 1060 the current is flown, and during the reversal rotation, the semiconductor switching elements 1010 and the semiconductor switching elements 1040 are presented to the "on" state and it converts the signal for flowing the reversal current into the motor 1060.

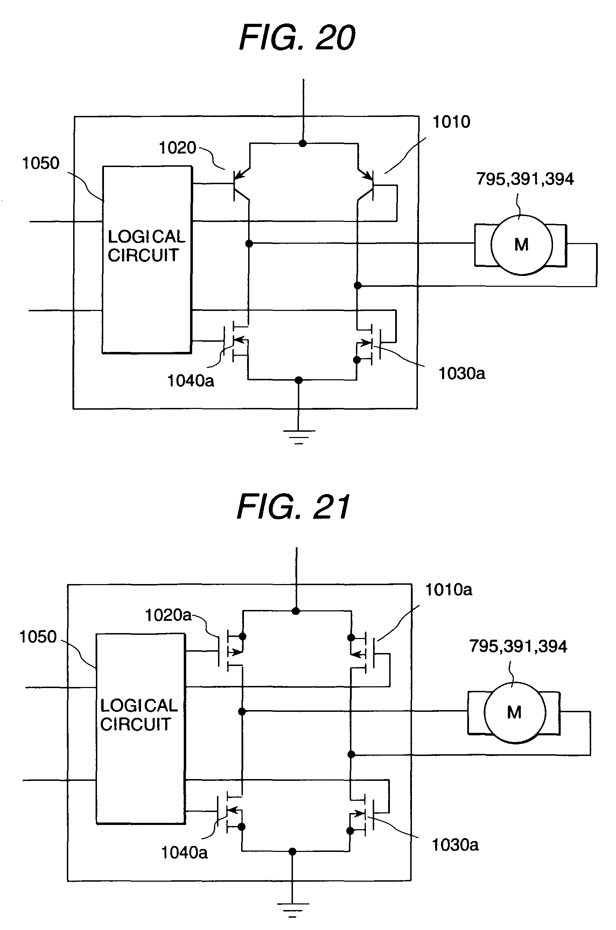

In the construction shown in Fig. 19, the upstream side two semiconductor switching elements which constitute H bridge are formed with semiconductor switching elements 1010a and 1020a having the short protection function and in the construction shown in Fig. 20, the downstream side two semiconductor switching elements which constitute H bridge are formed with semiconductor switching elements 1030a and 1040a having the short protection function.

And in the construction shown in Fig. 21, the upstream side and the downstream side all of four semiconductor switching elements which constitute H bridge are formed with semiconductor switching elements 1010a, 1020a, 1030a and 1040a having the short protection function.

In the construction shown in Fig. 18, since the semiconductor switching elements for constituting H bridge have not the short protection function, at another portion it is necessary to have the short protection function.

In the construction shown in Fig. 19, since the semiconductor switching element having the short protection function at the upstream side, when the load becomes the short the apparatus can be protected and when the power supply which is connected to the load becomes the short to the ground, the apparatus can be protected.

However, when the wire which is connected to the load becomes the short to the power supply side, then the semiconductor switching element at the downstream side is destroyed.

On the contrary to above, in the construction shown in Fig. 21, since the semiconductor switching element having the short protection function at the upstream side and the downstream side is used, when the load becomes the short the apparatus is protected, and further when the power load becomes the short the apparatus is protected and when the wire which is connected to the load becomes the short to the ground, and when the apparatus becomes the short at the power supply side and the apparatus can be protected.

The use manner of the four H bridges will be explained. The module which receives the supply of the power supply from the power bus 12, in concretely at the upstream side of FIM 5, BCM 14 and RIM 29 in the embodiment shown in Fig. 2, there are only two fusible links 4e and 4f.

When the load becomes the short and when the short protection function does not exist in the output circuit, since a whole loop system power supply system becomes the operation becomes inability, as a motor drive H bridge circuit in FIM 5 (Fig. 5), BCM 14 (Fig. 6) and RIM 29 (Fig. 7), it is necessary to use any one of the constructions shown in Fig. 19, Fig. 20 and Fig. 21.

However, since PCM 10 (Fig. 8) and ABS 11, A/C 16 etc. according to the embodiment shown in Fig. 2 have the fuses every functions each and every loads each as shown in PCM 10 shown in Fig. 8, even the apparatus has not H bridge circuit having the short protection function, since it does not present the fatal fail.

In this embodiment H bridge circuit having no short protection function shown in Fig. 18 is used. Of course, there is no problem in which H bridge circuits shown in Fig. 19, Fig. 20, Fig. 21 are used.

Similarly to, in the power supply supplying of DDM 18 and PDM 20, since the semiconductor switching elements having the short protection function are used, the semiconductor switching element having no short protection function shown in Fig. 18 is used.

In the embodiments shown in Fig. 4, since PCM 10, ABS 11 and A/C 16 are supplied the supply of the power supply from the power bus 12, it is necessary to arrange H bridge circuits having the short protection function shown in Fig. 19, Fig. 20 and Fig. 21 used in these modules. In concretely, as the circuit for driving the throttle motor, H bridge circuit shown in Fig. 20 is used.

Next, the over-current detection circuits in the output circuits of the modules shown in Fig. 5, Fig. 6, Fig. 7, Fig. 10, Fig. 11, Fig. 13, Fig. 14, Fig. 15, Fig. 16 and Fig. 17 will be explained.

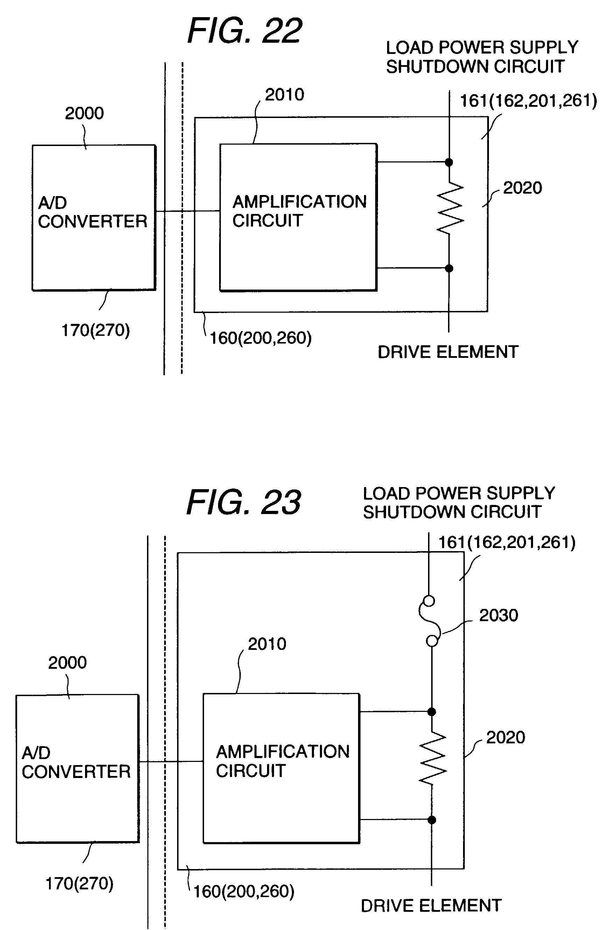

Fig. 22 shows the construction of the over-current detection circuit. An one end at the upstream side shunt resistor 2020 is connected to the electric power line and one end at the downstream side shunt resistor is connected to the plural semiconductor switching elements for driving the loads and further all of the currents which flow into the connected loads flow this shunt resistor 2020.

A potential difference between the both ends of the shunt resistor 2020 is amplified according to an amplification circuit 2010 and the current which flows into the shut resistor 2020, namely a total sum of the currents which flow into the load to be connected, is detected according to A/D converter 2000 of the control circuit.

In this embodiment, in accordance with the detection of the current, the dead short fail of the load, the leak short fail of the load, the complex fail of the load dead short fail and the dead short fail of the semiconductor switching element of the output circuit etc. are detected, accordingly the fail-safe operation can be carried out.

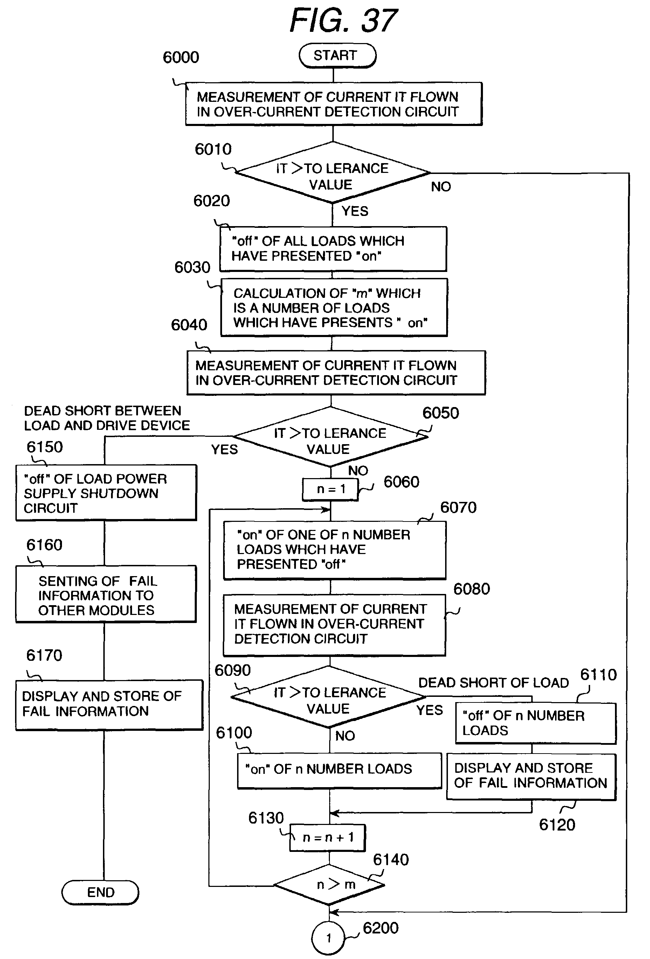

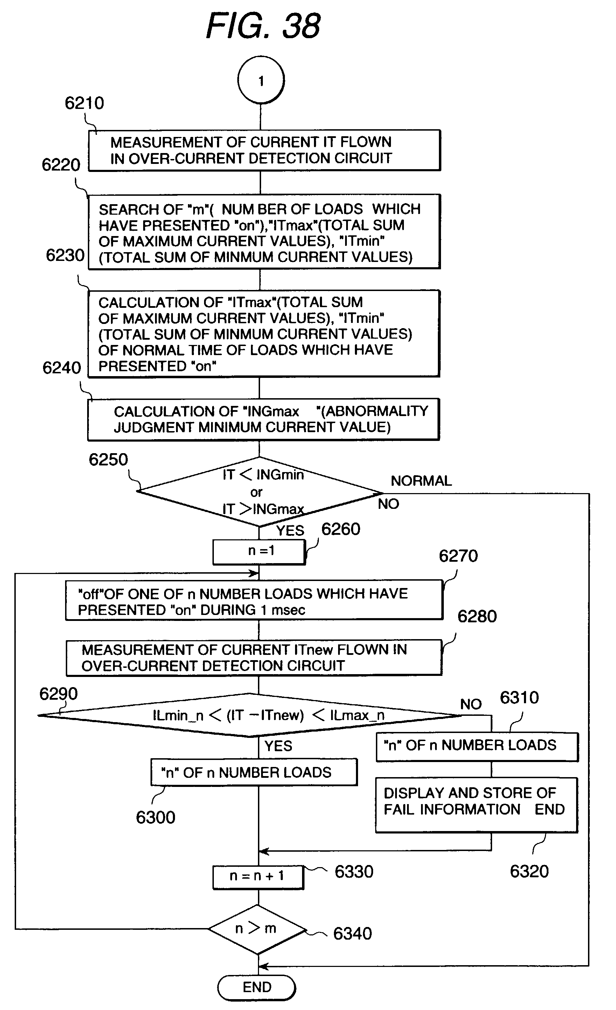

Using the flow charts shown in Fig. 37 and Fig. 38, the above stated fail detection manner and the above stated fail safe manner in the modules will be explained referring to Fig. 5, Fig. 6, Fig. 7, Fig. 10, Fig. 11, Fig. 13, Fig. 14, Fig. 15, Fig. 16 and Fig. 17.

Fig. 37 shows the above stated fail detection manner of the load and a fail safe manner. Firstly, in a step 6000, the current IT which flows into the over-current detection circuit is measured by A/D converter 2000 shown in Fig. 22.

Next, in a step 6001, the current IT which was measured is judged that whether the Current is more than a predetermined tolerance value or not. The above stated tolerance value is a numeric value that this value is less than a value in which when the current flows more than the tolerance value, any portion of the module is destroyed and this numeric value is established to be more than the current value in which all loads connected to the module operate.

In the step 6010, when the current IT is judged less than the tolerance value, it is judged that there is no fatal dead short fail, and a step 6200 shown in Fig. 38 is carried out. In the step 6010, when the current IT is judged more than the tolerance value, any load is assumed to become the short, and after steps including a step 6020 are carried out.

In a step 6020, since all of the loads which are presented to the "on" state present to be the "off" state, all of the semiconductor switching elements of the output circuit are presented to the "off" state. In a step 6030, a number m of the loads which have presented at the "on" state is calculated and in a step 6040, the current IT is measured again.

Herein, when all of the semiconductor switching elements are performed to the "off" state, in regardless the semiconductor switching element becomes to the fail, then the current will not flow.

To judge this, in a step 6050, it is compared that whether the current IT to be measured again (the current during all of the semiconductor switching elements presenting to the "off" state) exceeds the above stated tolerance value or not.

Herein, when the current IT is more than the above stated tolerance value, the semiconductor switching element become the fail and also the load become the dead short fail. The reasons why when the load is normal but the semiconductor switching element becomes the fail, there is no case where the current IT is more than the above stated tolerance value.

Accordingly, to perform the shutdown the loop system power supply system is not to supplied the power supply to the fail point, firstly in a step 6150, to perform the "off" state of the load power supply shutdown circuit of the module which is connected to the power supply system which has presented to the fail, in a step 6160, the fail information is sent to other module via a multiple bus.

In the module which has received this fail information, when the information is the information in which the load power supply shutdown circuit itself should be performed to the "off" state, immediately the load power supply shutdown circuit is performed to the "off" state. With the above stated construction, the failed power supply system can be shutdown and then the continuation of the current flowing can be prevented.

Further, in a step 6170, the fail point and the contents of the fail are displayed and further it stores as the service information to the dealer. This stored information can be read out according to the diagnosis apparatus shown in Fig. 1, etc..

A manner for performing the shutdown the failed power supply system will be explained clearly referring to the embodiment shown in Fig. 2.

As one example, it is assumed that both of a fuel pump 392 connected to RIM 29 shown in Fig. 7 and a semiconductor switching element 364 for driving the fuel pump 392 will be failed according to the dead short fail.

In this case, when the fail is detected in accordance with the current which flows into the over-current detection circuit 361 of RIM 29, firstly a contact of the relay of the load power supply shutdown circuit 310 of the failed power supply system is presented to the "off" state, and the electric power line 12E of the failed power supply system and the electric power line 12D of the normal power supply system are carried out the shutdown operation.

Further, since the electric power line 12E of the failed power supply system is connected to the electric power line 12F, a contact of the relay of the second load power supply shutdown circuit 210b of BCM 14 shown in Fig. 6 in which the electric power line 12F is connected is performed to present to the "off" state, and the electric power line 12F of the failed power supply system and the electric power line 12G of the normal power supply system are performed to the shutdown.

Accordingly, since only the failed power supply system is performed to the shutdown, the load which is connected to the normal power supply system can be operated normally.

When the current IT which has measured again in the above stated step 6050 is less than the tolerance value, the semiconductor switching element is not the fail but any load is presented to the dead short. In after the steps including a step 6060, it is judged that any load is presented to the short.

In the step 6060, a numeric value n for indicating what time repetition of a following processing is initialized to be "1". In a step 6070, after only one load which has presented to the "off" state is presented to the "on" state, in a step 6070, the current IT during this time is measured and in a step 6090, the current IT in this time is compared with the above stated predetermined tolerance value.

When the current IT in this time is more than the predetermined tolerance value, it means that the load which has presented to the "on" state is performed to the dead short, in a step 6110, hereinafter regardless the return condition is effected the load is performed to the "off" state. Further, in this time similarly to the above, in a step 6120, the fail information is displayed and stored.

In a step 6090, the current value IT is less than the predetermined tolerance value, then it is judged that the load is not presented to the dead short, in a step 6100, the semiconductor switching element for driving the load is presented to the "on" state, then it is performed as the normal operation.

With the above stated steps, the diagnosis about one load finished, but to diagnose the remaining loads, in a step 6130, the above stated numeric value n is performed to increase by "1", in a step 6140 it is compared that whether all processing have finished or not, and when the steps have not finished, the processing after the steps including a step 6070 are repeated and then when the steps have finished, a step 6200 shown in Fig. 38 which is a next processing is carried out.

Fig. 38 shows a process for performing the "off" state the loads according to the detection in which the current having more than a normal value is detected by the leak of the load but not according to the detection of the dead short.

In a step 6210, the current value IT is measured. In a step 6220, the maximum current value ILmax and the minimum current value ILmin of all the loads at the normal time which operate during the current value IT measurement are searched, and further a number m of the operated loads is calculated.

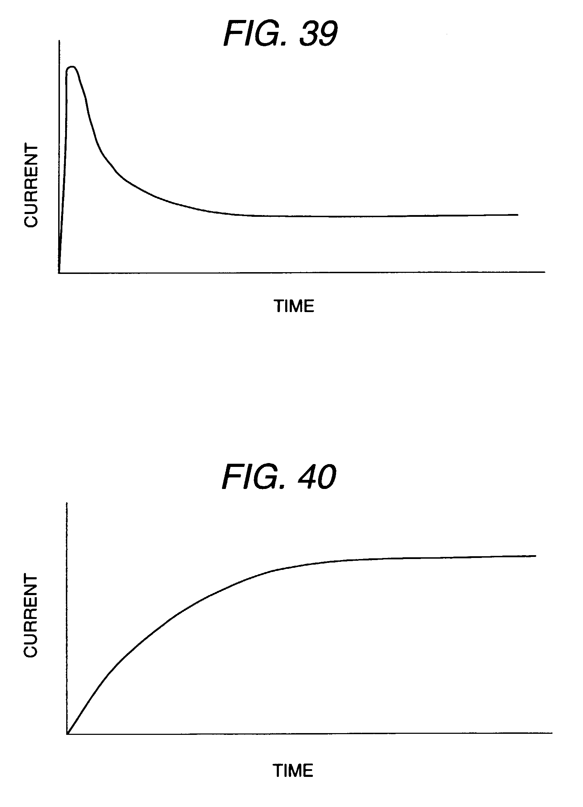

For example, Fig. 39 shows an example of a center value of the current at the normal time of the lamp from the operation starting, and Fig. 40 shows an example of a center value of the current at the normal time of the motor from the operation starting.

As stated in above, the current data of all of the loads at the normal time have stored in advance in a memory, and the data is searched and the scattering data is added to the searched center value, in a following formula 1 and a following formula 2, the maximum current value ILmax and the minimum current value ILmin of all the loads at the normal time are calculated.$\begin{matrix}\begin{matrix}\begin{matrix}\text{ILmax = current at normal time x (1 + α)}\end{matrix} \\ \begin{matrix}\text{ILmin = current at normal time x (1 - α)}\end{matrix}\end{matrix}\end{matrix}$

Herein, α indicates a scattering degree.

In a step 6230, a total sum ITmax of the maximum current value and a total sum ITmin of the minimum current value of the current value at the normal time of the loads which have presented to the "on" state are calculated according to a following formula 3 and a following formula 4.$\begin{matrix}\begin{matrix}\begin{matrix}\text{ITmax =} \text{n=1} \text{m} \text{ILmax}\end{matrix} \\ \begin{matrix}\text{ITmin =} \text{n=1} \text{m} \text{ILmin}\end{matrix}\end{matrix}\end{matrix}$

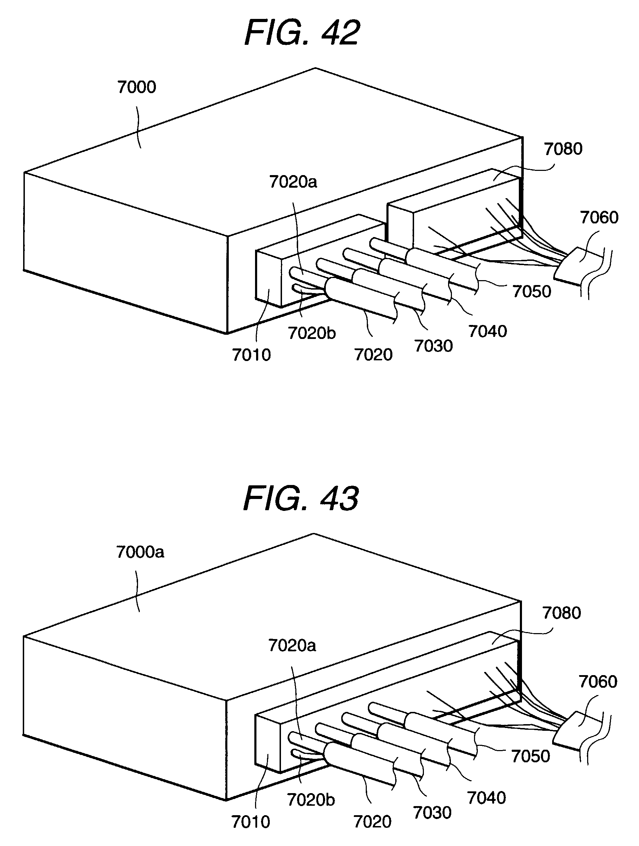

For example, when the two loads shown in Fig. 39 and Fig. 40 are operated, the total sum becomes the current value shown in Fig. 41.

Next, in a step 6240, the abnormality judgement maximum current value INGmax is calculated according to a following formula 5 and the abnormality judgement minimum current value INGmin is calculated according to a following formula 6.$\begin{matrix}\begin{matrix}\begin{matrix}\text{INGmax = ITmax + A}\end{matrix} \\ \begin{matrix}\text{INGmin = ITmin - A}\end{matrix}\end{matrix}\end{matrix}$

Reference numeral "A" in the formula 5 and 6 is a predetermined constant value having more than zero (0).

In this embodiment, the calculation about the abnormality judgement current value is calculated by adding the predetermined constant value, however it may be requested according to the proportion calculation.

The current value IT measured in a step 6210 and the abnormality judgement current value calculated in a step 6240 are compared in a step 6250. When the current value IT is larger than the abnormality judgement minimum current value INGmin and is less than the abnormality judgement maximum current value INGmax, since it shows the normal, the processing is finished.

At the time except for the above case, it is judged that any load becomes the abnormality and to specify the abnormal load, a following processing is carried out.

In a step 6260, a numeric value n which the following processing are repeated what times is initialized to be "1". In a step 6270, after 1 ms where one load which has presented to the "on" state is performed to the "off" state, in a step 6270, the current ITnew at this time is measured.

In a step 6290, when the varied current value (IT - ITnew) according to the "off" state is smaller than the maximum current value ILmax of the load which was requested by the search in the step 6220 and is larger than the maximum current value ILmin, the load is normal, and then in a step 6300, the semiconductor switching element for driving the load is performed to the "on" state, and it made to be the operation at the normal time.

In a step 6290, it is judged as the load abnormality, regardless the return condition is effected the load is performed to the "off" state. Further, in a step 6320, the fail information is displayed and stored.

To diagnose the remaining loads, in a step 6330, the above stated numeric value n is performed to increase by "1", in a step 6340 it is compared that whether all processing have finished or not, and when the steps have not finished, the processing after the steps including a step 6270 are repeated.

As stated in above, when both of the load and the semiconductor switching element become the short fail, since the power supply system is performed to the shutdown, the loop system power supply system is not received any affect.

Further, when the short and the rare short of the load is detected, only the corresponding semiconductor switching element can be performed to the shutdown, only the fail point is separated, and then any other loads is not received the affect.

Further, in this embodiment, to the semiconductor switching element the matter having the over-temperature detection shutdown function in the interior portion is employed, as stated in above, since the current of the respective loads is detected, the protection function of the semiconductor switching element can be performed to have the over-current limitation function having large scattering only to aim not to destroy the semiconductor switching element and the short protection can be carried out fully, accordingly the construction of the semiconductor switching element can be simplified.

Fig. 23 shows another embodiment of the over-current detection circuit and the different points in the construction shown in Fig. 22 is that a fuse is connected to a shunt resistor 2020 in series.

In this circuit, the fail detection and the fail safe processing shown in Fig. 37 and Fig. 38 are carried out, and further when the failed power system is not performed the shutdown even the failed power system is performed the shutdown, since the fuse 2030 is fused, the fail point can be performed the shutdown.

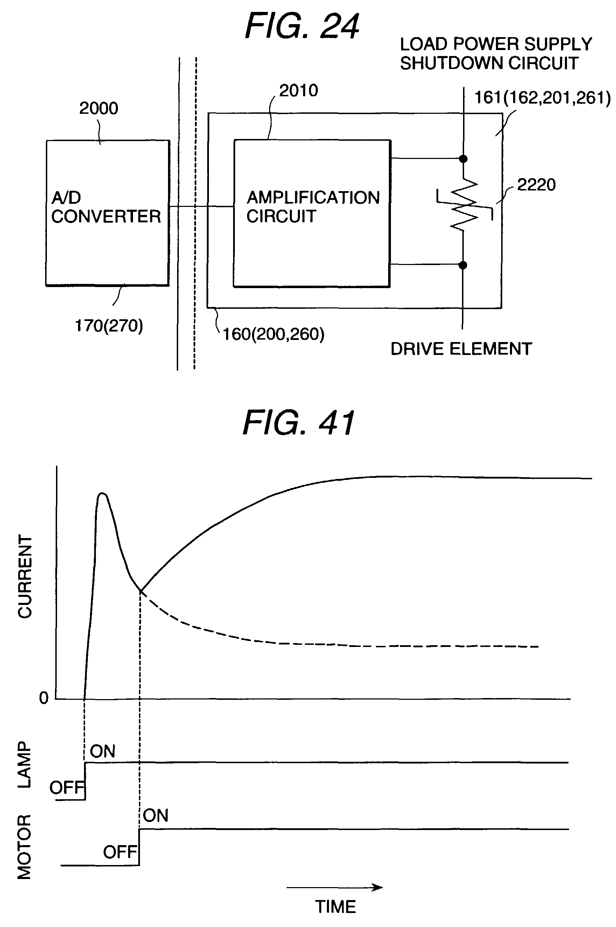

Fig. 24 shows a further another embodiment of the over-current detection circuit, and the different points shown in Fig. 22 is that a protection element (hereinafter, PTC element) 2220 having PTC characteristic (the characteristic when the temperature is risen, the resistance is increased) in place of the shunt resistor 2010.

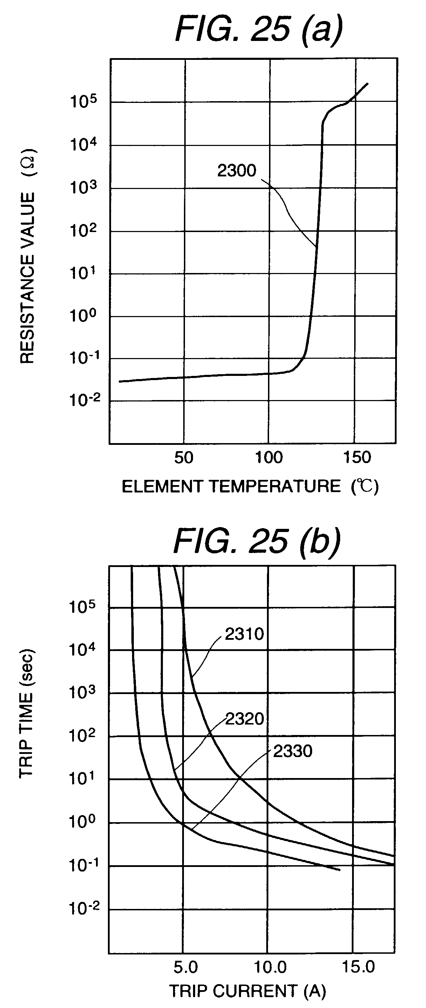

PTC element has the temperature characteristic as shown in Fig. 25(a) and when the temperature of the element is risen more than some temperature (in this embodiment about 120°C), the resistance value increases abruptly. The resistance value having about several ten mΩ of PTC element in this embodiment increases the temperature having from about several ten kΩ to about several hundred kΩ.

Further, the factor in which the temperature raises is the current which flows into PCT element, and a relationship between the current and a time (a trip time) for increasing abruptly the resistance value is shown in Fig. 25(b).

The characteristics 2310, 2320 and 2340 are the characteristics when the respective surrounding temperatures are 0°C, 20°C and 60°C, respectively, at the time of the current having more than 15A, the characteristic is that the resistance value increases less than one second.

With this PCT element the current is detected, when the very large current flows, since the resistance value of PTC element is increased, and since the potential difference between PTC elements, it appears the large difference in the detection voltage at the normal time and at the abnormal time. Accordingly, the detection accuracy is made rough.

Further, in this circuit, the fail detection and fail safe processing shown in Fig. 37 and Fig. 38 but when the failed power supply system is tried to perform the shutdown but the shutdown processing is not carried out, since the resistance value of PTC element is increased, the current value can be restrained, and therefore the flow continuation of the over-current can be prevented.

In the embodiments shown in Fig. 2, Fig. 3 and Fig. 4, the power bus 12 which makes a round in the vehicle is installed, when the electric power line becomes the short circuit in the vehicle, the power supply is not supplied to all of modules and then almost all functions of the automobile are made to stop.

Accordingly, in the embodiment examples, when there is an afraid of the short circuit in the electric power line, such a short circuit is detected before this happens and the necessary treatments can be carried out.

One construction elements of the above stated treatments is the electric power line having the above stated short sensor. As the embodiment of the electric power line, three kinds of the constructions shown in Fig. 26, Fig. 27 and Fig. 28 are shown.

In the construction shown in Fig. 26, to connect to the module, a connector 3050 is employed. A rubber plug 3080 has a role of the water proof. The electric power line 3020 is connected to a terminal 3060 with a faucet manner and is connected to the connector of the module with the fitting.

Similarly to, a short sensor 3010 made by a connector for shield is connected to a terminal 3070 with a faucet manner and is connected to the connector of the module with the fitting-into.

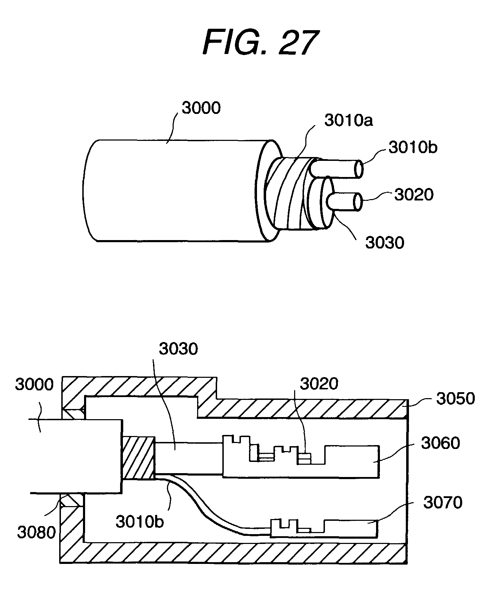

In the construction shown in Fig. 27, the short sensor constituted by the connector for shield is constituted by an aluminum film 3010a and a drain wire 3010b which contacts to an inner side of the aluminum film.

With the construction, when the terminal 3070 is carried out by performing the faucet manner, since it is unnecessary to untie the connector for shied, the process manner can be carried out easily.

Further, in comparison with the connector for shield, since the conductive body can be formed at all faces, even the contact with the material such as a needle, the short can be detected, accordingly the detection performance as the short sensor can be improved.

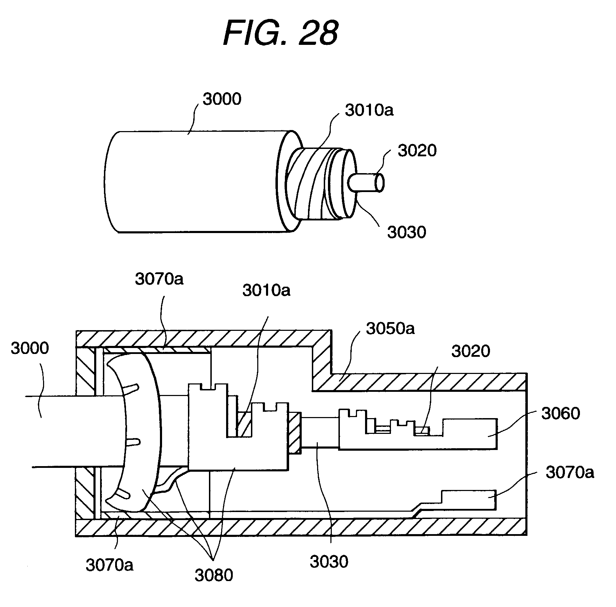

The construction shown in Fig. 28 is a construction in which the drain wire 3010b shown in Fig. 27 is deleted.

In this case, to connect the short sensor 3010a to the module, it is necessary to devise a connector 3050a. The electric power line is connected to the terminal 3060 with the faucet manner as shown in Fig. 26 and Fig. 27 but a connector 3070a for connecting the short sensor to the module is formed with the connector as one body as shown in figure.

The connector 3070a is buried with a cylindrical form at an inner periphery of a harness side of the connector 3050a and is formed with a portion for connecting the module as one body and further has the same potential.

On the other hand, the short sensor 3010 of the electric power line is connected to a faucet portion of another relay terminal 3080 with a faucet manner.

In the relay terminal 3080, a faucet portion of the short sensor, a portion having a spring force to connect according to a contact with the terminal 3070a and a portion for connecting the two portions are formed as one body.

The procedure of the process is that firstly the terminal 3060 and the electric power line 3020 are connected to with the faucet manner, the short sensor 3010a and the relay terminal 3080 are connected to with the faucet manner, and the faucet member is inserted to the connector 3050a. In the short sensor, between the relay terminal 3080 and the terminal 3070a is connected with the connection manner.

With this construction, the structure of the electric power line can be simplified, and further the terminal process of the short sensor can be simplified.

Next, a manner for detecting the short using the short sensor will be explained. As to the short detection circuit which is provided in the respective modules will be explained referring to Fig. 5 by exemplifying the representative example of one circuit part of the short detection circuit 130 of FIM 5 shown in Fig. 5.

The explanation of the construction shown in Fig. 5 will be omitted because the statements have stated in above.

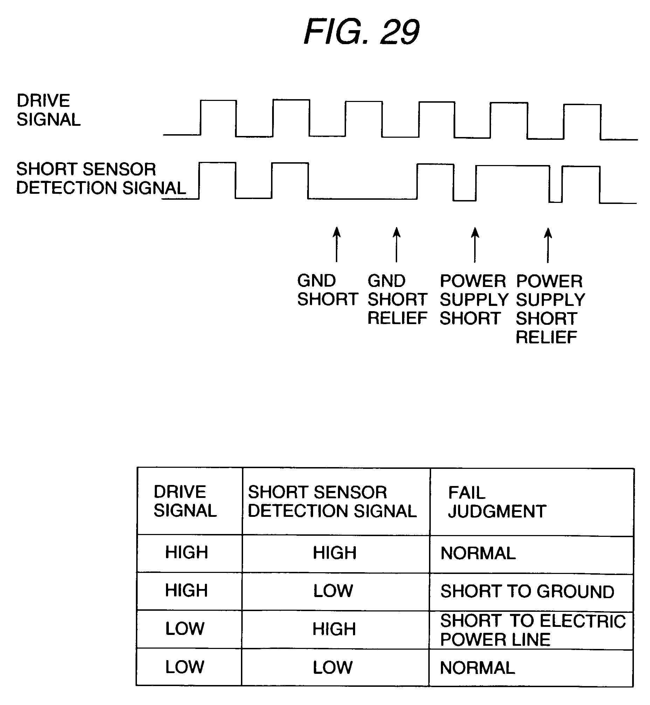

When a control signal of a voltage application drive circuit 131 is controlled with a pulse shape waveform as shown in the drive signal shown in Fig. 29, in the normal time the waveform having the same drive signal is inputted in a control circuit 170, when it is performed the short to the ground (hereinafter a lower side short), the waveform which is originally to be a high potential becomes a low potential.

Further, when the short is performed to the electric power line (hereinafter, an upper side short), the waveform which is originally to be a low potential becomes a high potential.

According to the detection of this logic, it can be detected that whether the short sensor is the lower side short or is the upper side short.

Further, as explained in Fig. 2, since the short sensor has an open condition at portions of the connectors 17A, 17B, 17C and 17D, it can detect that in FIM 5, the lower side short and the upper side short of the electric power lines 12A and 12H, in BCM 14, the lower side short and the upper side short of the electric power lines 12B, 12C, 12F and 12G, in RIM 29, the lower side short and the upper side short of the electric power lines 12D and 12E and then the fail point can be specified.

Further, according to the connector, since the electric power lines 12B, 12C, 12F and 12G are separated in the cabin, the electric power lines 12D and 12E are separated in the trunk room, in a case of a mending of the fail point, it can be constituted to mend only one harness.

In this embodiment stated in above, when there occurs an afraid about the short circuit in the electric power line, the afraid is detected before it happens and the necessary treatments are carried out, the functions and the operations of the load power supply shutdown circuit which is the important construction of the function will be explained.

The functions of the load power supply shutdown circuit, as explained in the above stated construction shown in Fig. 37, there are functions which are the function for separating the fail point from the power bus 12 during the dead short of the load and during the dead short of the output circuit, the fail safe function for separating the fail point from the power bus 12 by detecting beforehand the upper side short and the lower side short of the electric power line which will be explained in a latter portion, and the sleep function for reducing the consumption current by carrying out the shutdown the power supply supplying when the man does not exist in the vehicle and the vehicle is left alone.

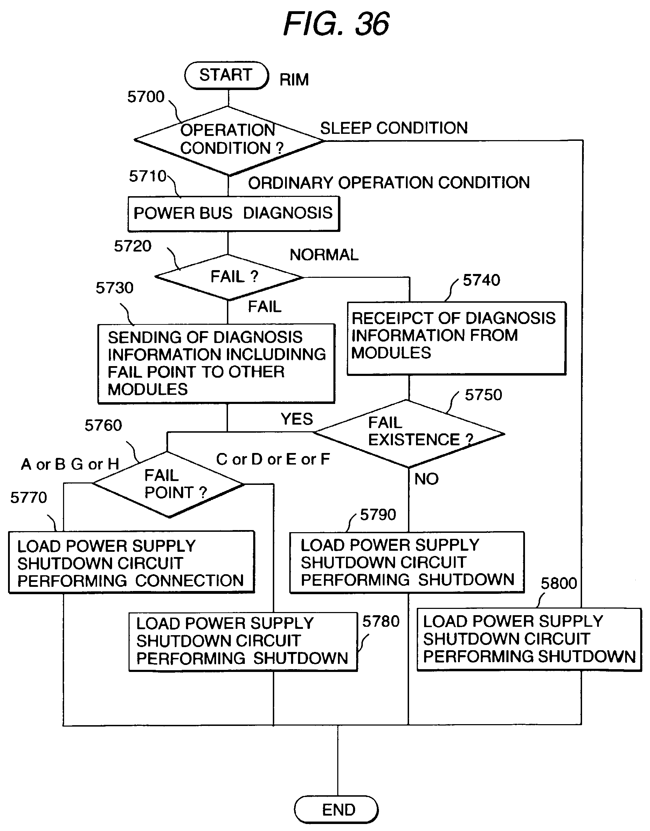

Using the construction shown in Fig. 36, in a whole system, it will be explained that how the above stated fail safe function and the above stated sleep function are carried out.

In a step 5000, it is judged that whether it is the sleep condition where the man does not exist in the vehicle and the vehicle is left alone or whether the normal operation condition, for example, when the ignition switch is presented to the "on" state and the accessory switch is presented to the "off" state, and the all of doors are the closing conditions, and there is no load being operated, it is judged as the sleep condition.

When it is judged as the sleep condition, in a step 5060, the load power supply shutdown circuit is performed the shutdown, and the power supply supplying to the loads is performed the shutdown.

As a device for carrying out the shutdown the load power supply shutdown circuit a relay is employed, and this relay is that the connection is carried out when the current is continued to flow the load. When during the sleep condition that the connection is carried out the current is continued to flow the coil, the battery is discharged.

As stated in above, during the sleep condition when the load power supply shutdown circuit is performed the shutdown, the current does not flow into the coil of the relay and the leakage current of the semiconductor switching element which is employed in the output circuit does not flow, accordingly the consumption of the current can be restrained.

Further, since the power supply for the coil of the relay and the control system power supply are formed with the separate power supplies against the power bus 12, even when the load power supply shutdown circuit is performed the shutdown, the control circuit can be operated.

During the normal operation condition, in a step 5010, in all of the modules which are connected to the power bus 12, the diagnosis for the power bus is carried out.

As the diagnosis manner, the short detection manner according to the short sensor stated in above is carried out. As the diagnosis for the power bus, the aim will be attained using the current detection manner.

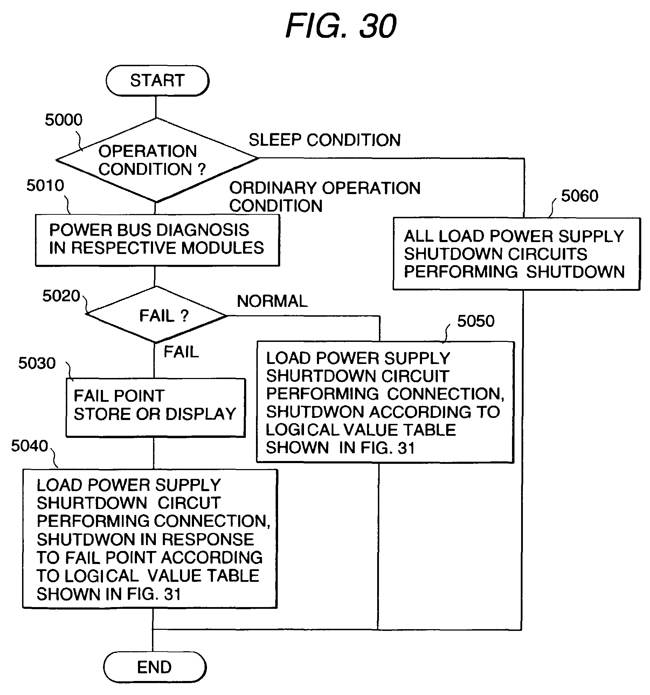

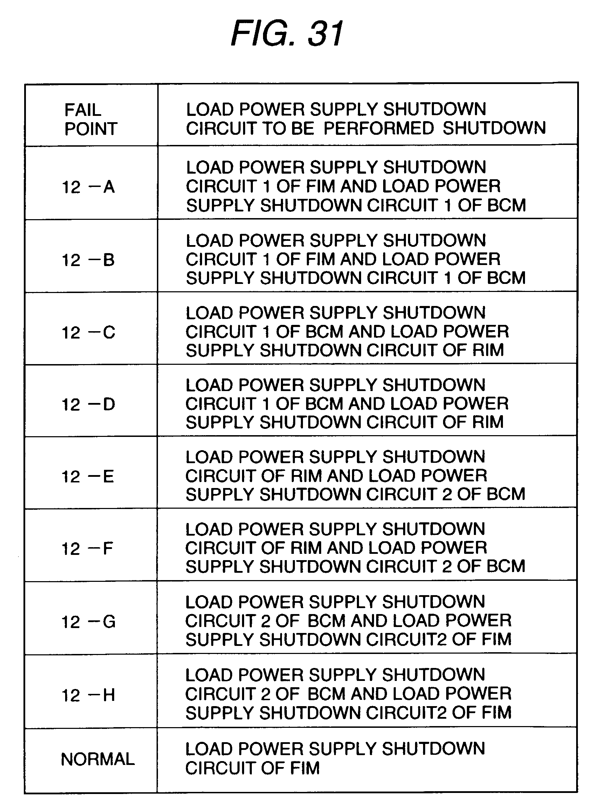

As the result of the diagnosis, when it is judged as the fail in a step 5020, in a step 5030, the fail information such as the fail point and the fail contents etc. is displayed, and it is stored in the memory, in a step 5040, the connection and the shutdown of the load power supply shutdown circuit of the respective modules is carried out as shown in the logical value table shown in Fig. 31 in response to the fail point.

In a case of the normality, according to the logic during the normality of the logic value table shown in Fig. 31, the connection and the shutdown of the load power supply shutdown circuit can be carried.

As an example of the representative example for showing the logic of the load power supply shutdown circuit shown in Fig. 31 in which the fail point is performed the shutdown, a case wherein the electric power line 12 is the short will be explained.

The construction of the embodiment of the system will be explained referring to construction shown in Fig. 2, the construction of the embodiment of the module will be explained referring to FIM shown in Fig. 5, the construction of the embodiment of the module will be explained referring to BCM 14 shown in Fig. 6, and the construction of the embodiment of the module will be explained referring to RIM 29 shown in Fig. 7, respectively.

When in FIM 5 the short of the electric power line 12A shown in Fig. 2 is detected in advance, a contact of the relay of the first load power supply shutdown circuit 110a of FIM 5 and a contact of the relay of the first load power supply shutdown circuit 210a of BCM 14 are performed the shutdown, and the relay of the load power supply shutdown circuit 310 of RIM 29 which has performed the shutdown during the normal time is connected.

The failed point electric power line 12A and the electric power line 12B which is connected directly by the connector 17A are performed completely the shutdown according to the power bus 12.

When the contact of the relay of the first load power supply shutdown circuit 210a of BCM 14 is performed the shutdown, the electric power line 12C is performed the shutdown according to the power bus 12, however since the relay of the load power supply shutdown circuit 310 of RIM 29 which has performed the shutdown during the normal time is connected, the power supply is supplied from the reverse direction against the normal time.

Accordingly, only a part of the failed electric power line is performed the shutdown, the loads (in this embodiment, only the head lamp left 1, the turn lamp left, the horn 8, PDM 20), which are received the supply of the power supply from the electric power line, can not be operated.

The construction of the embodiment of the system will be explained referring to construction shown in Fig. 2, the construction of the embodiment of the module will be explained referring to FIM shown in Fig. 5, the construction of the embodiment of the module will be explained referring to BCM 14 shown in Fig. 6, and the construction of the embodiment of the module will be explained referring to RIM 29 shown in Fig. 7, respectively.

When in FIM 5 the short of the electric power line 12A shown in Fig. 2 is detected in advance, the contact of the relay of the first load power supply shutdown circuit 110a of FIM 5 and the contact of the relay of the first load power supply shutdown circuit 210a of BCM 14 are performed the shutdown, and the relay of the load power supply shutdown circuit 310 of RIM 29 which has performed the shutdown during the normal time is connected.

The failed point electric power line 12A and the electric power line 12B which is connected directly by the connector 17A are performed completely the shutdown according to the power bus 12.

When the contact of the relay of the first load power supply shutdown circuit 210a of BCM 14 is shutdown, the electric power line 12C is performed the shutdown according to the power bus 12, however since the relay of the load power supply shutdown circuit 310 of RIM 29 which has performed the shutdown during the normal time is connected, the power supply is supplied from the reversal direction against the normal time.

Accordingly, only a part of the failed electric power line is shutdown, the power supply supplying to the loads is supplied from the reversal direction, the apparatus can be operated.

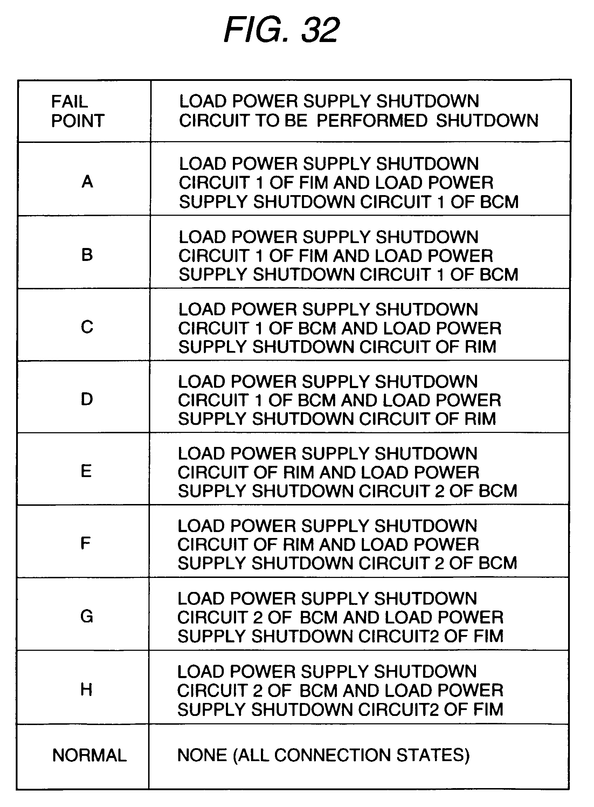

The construction shown in Fig. 32 is another manner of the load power supply shutdown circuit during the fail safe time, in the construction shown in Fig. 31, during the normal time, the load power supply shutdown circuit 310 of RIM 29 is presented to the "off" state, however this differs a case where all of the load power supply shutdown circuits are presented to the "on" states.

When the load power supply shutdown circuit 310 of RIM 29 is presented to the "off" state during the normal time, at the time of the short detection manner according to the current detection, since the direction of the current is fixed, the detection can be carried out easily.

Further, when the load power supply shutdown circuit 310 of RIM 29 is presented to the "on" state during the normal time, a time for performing the "on" state the load power supply shutdown circuit 310 of RIM 29 during the normal time can be shortened.

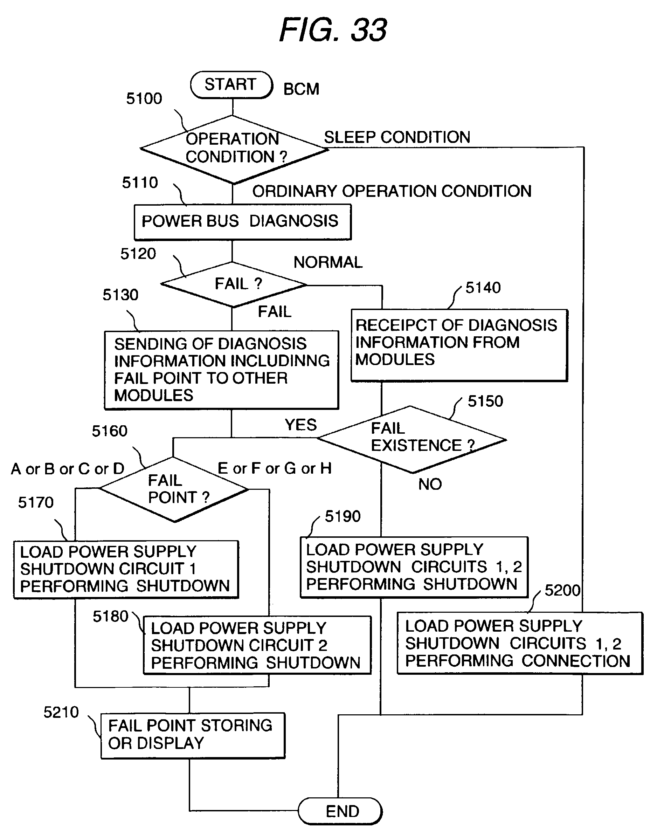

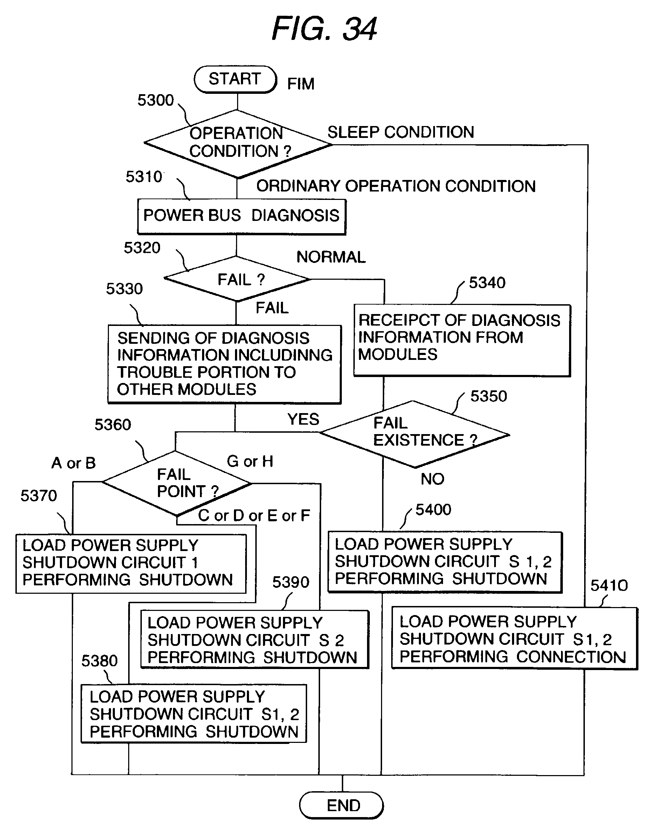

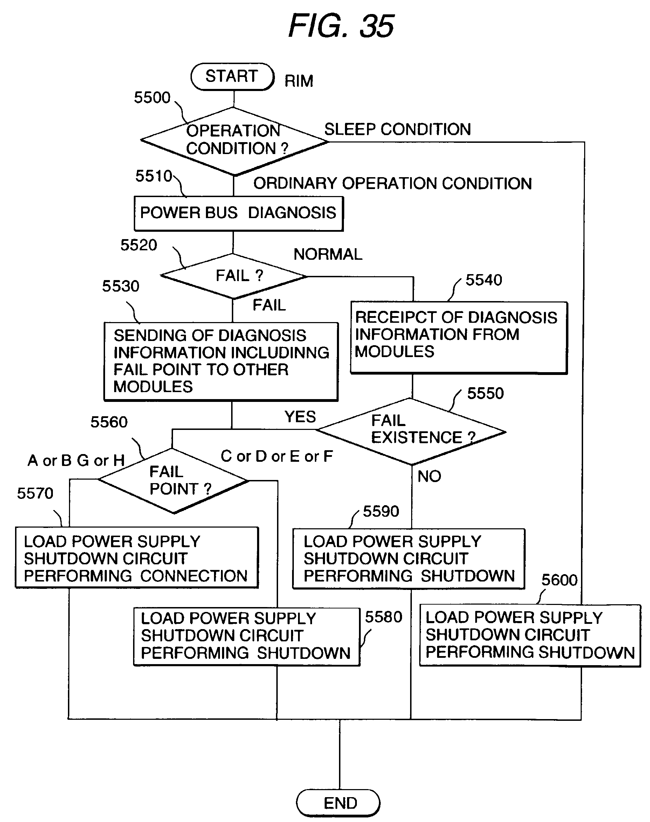

Fig. 33, Fig. 34 and Fig. 35 are respectively the process flow charts of BCM 14, FIM 5 and RIM 29 when the logic shown in Fig. 31 is controlled.

Further, Fig. 36 is a process flow chart of RIM 29 when the logic shown in Fig. 32 is controlled. The constructions are substantially the same ones, it will be explained the flow chart of BCM 14 shown in Fig. 33 as the representative example.

In a step 5100, it is judged as the sleep condition, in a step 5200, the first load power supply shutdown circuit 210a and the second load power supply shutdown circuit 210b are performed the shutdown and then the process has finished.

In the ordinary operation condition, in a step 5110, the diagnosis of the power bus is carried out according to the short detection circuit 230, as a result, in a step 5120 when it is judged as the fail, in a step 5130, the diagnosis information in which any fail point exists another module is received by the multiple communication bus and then after the steps including a step 5160 are carried out.

On the other hand, in a case of the normality, since it is judged whether there exists the fail on the electric power line which diagnoses the fail in another module or not, in a step 5140, the diagnosis information from the other modules are received.

In accordance with the above stated diagnosis information, in a step 5150 when it is judged as the fail, in a step 5160, where fail point is judged, and when the fail point is any of the electric power lines 12E, 12F, 12G and 12H, in a step 5180, the second load power supply shutdown circuit 210b is performed the shutdown, in a step 5210, the fail point is displayed and it is stored in the memory.

In a step 5150, when there is no fail point, the first load power supply shutdown circuit 210a and the second load power supply shutdown circuit 210b are connected and then the process has finished.

Since the process flow charts in other modules are the same ones, it will be omitted. With the processes in above, a system operation shown in Fig. 30 can be carried out.

Fig. 42 and Fig. 43 are the construction views for showing the connection manner of the module with the power bus 12.

The construction is constituted by a module 4000 shown in Fig. 42, power buses 7020, 7030, 7040 and 7050 and an electric power line 7020a, a short sensor 7020b. Only the power buses are connected to the module 700 according to a connector 7010, another electric power line 7060 is connected to the module 7000 with another connector 7080. In the construction shown in Fig. 43, the power buses 7020, 7030, 7040 and 7050 and the another electric power line 7060 are connected to a module 7100 with the same connector 7110.

As shown in the construction shown in Fig. 42, when it is connected to the module using the connector having the power bus, according to a number of the other electric power lines, since it is unnecessary to alter the connector, the standardization of the connector can be attained.

Further, as shown in the construction shown in Fig. 43, when the integral connector is employed, the occupation area of the connector can be deleted, accordingly the module can be made small.

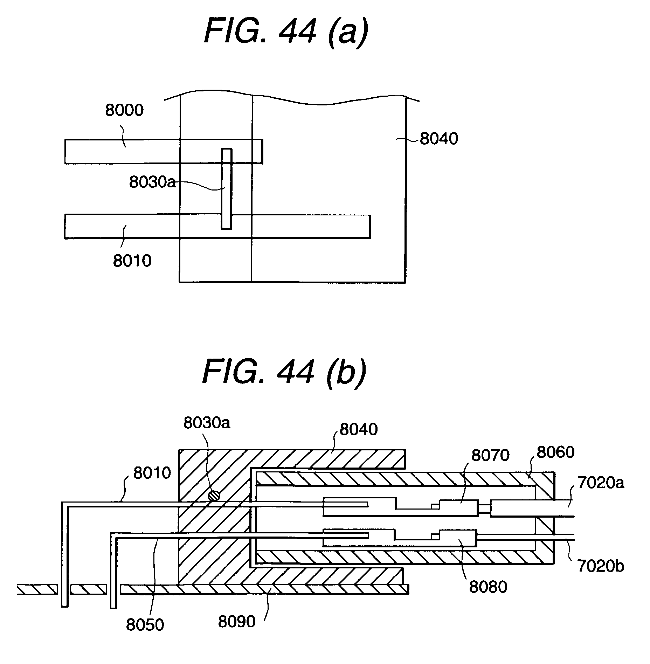

Fig. 44 is the construction view in which the shunt resistor used in the over-current detection circuit is installed in the connector of the module.

The construction is constituted by a connector housing 8040 of the module is connector terminals 8000 and 8010, a shunt resistor 8030, and the connector housing 8040 and the shunt resistor 8030 are connected to the connector terminals 8000 and 8010 according to the welding manner or the soldering manner.

The construction is constituted by an electric power line 7020a of the power bus, a short sensor 7020b, and the electric power line 7020a and the short sensor 7020b are connected respectively to module side terminals 8010 and 8050 through terminals 8070 and 8080.

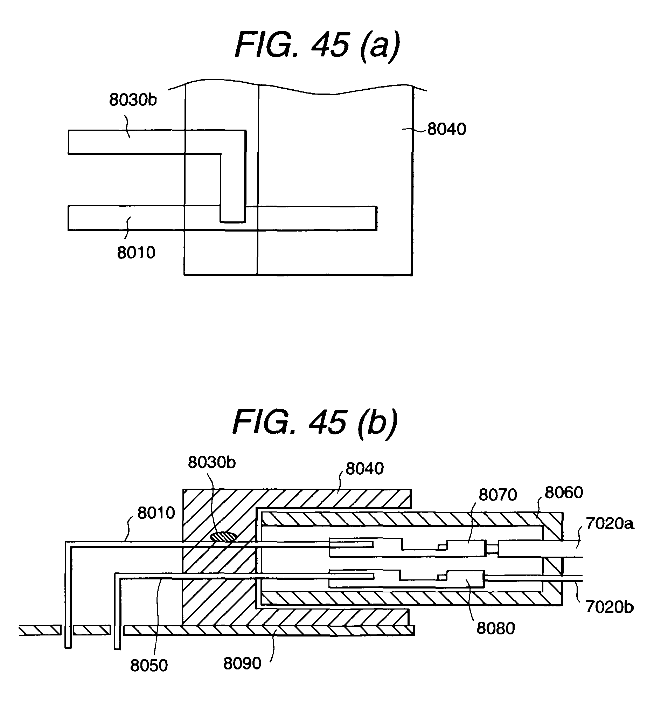

In the construction shown in Fig. 45 compared with the construction shown in Fig. 44, the shunt resistor 8030a and the connection terminal 8000 are formed as one body 8030b.

As stated in above, since the shunt resistor is installed in the interior portion, the distance for flowing the large current can be shortened, further also the size of the module can be made small.

According to the present invention, there are effects that the fuse number can be made small, further the wire harness for supplying the power supply can be shortened or can be lessened.

According to another invention, not only the occurrence of the short circuit abnormality of the electric power line can be prevented in advance and also the abnormality point during the short circuit abnormality occurrence can be specified.

Further, according to a further invention, since the over-current detection circuit is provided, when the load being the fail such a failed load can be separated.

Further, according to a furthermore invention, the consumption current of the power supplying apparatus during the non-operation of the vehicle can be reduced.

## Claims

1. A power supplying apparatus for a vehicle, comprising:
an electric power line for being wired in an interior of a vehicle from a battery (3) and for supplying a power to various kinds of loads of said vehicle;
plural short sensors (3010) for detecting a short between plural sections of said electric power lines (12A-H); and
a control circuit for specifying said short section of said electric power line in accordance with a short detection condition of said plural short sensors (3010).

2. A power supplying apparatus for a vehicle according to claim 1, characterized in that
between said short sensor and another short sensor, a connector (17A-D) for connecting said electric power lines (12A-H) each other is arranged.

3. A power supplying apparatus for a vehicle, comprising:
a load drive use electric power line for being wired in an interior of a vehicle from a battery (3) through a fuse;
a control circuit drive use electric power line for being wired in said interior of said vehicle from a battery (3) through another fuse;
a control apparatus including:
a control circuit (170,270,370) for being supplied a power from said control circuit drive use electric power line, and
a load drive circuit (160,260,360) provided between said load drive use electric power line and said load and for controlling a supply of a power to said load in response to a signal from said control circuit (170,270,370).

4. A power supplying apparatus for a vehicle according to claim 3, characterized in that
an over-current detection apparatus provided between said load drive circuit (160,260,360) and said fuse and for detecting an over-current condition of said load drive circuit and further for transmitting said detected current condition to said control circuit (170,270,370); and
a shutdown circuit (110,210,310) for performing a shutdown an electric line between said fuse and said load drive circuit (160,260,360) in response to a signal from said control circuit (170,270,370).

5. A power supplying apparatus for a vehicle according to claim 3, characterized in that
a short sensor (3010) for detecting an abnormality according to a short of said load drive use electric power line; and
a shutdown circuit (110,210,310) for performing a shutdown an electric line between said fuse and said load drive circuit (160,260,360) in response to a signal from said short circuit (130,230,330) through said control circuit (170,270,370).

6. A power supplying apparatus for a vehicle according to claim 3, characterized in that
said control apparatus includes a communication control circuit (140,240,340);
one control apparatus and another control apparatus are connected by a communication line each other; and
in response to a condition of a switch which is inputted to said one control apparatus, a supply and a stop of the power against to a load of said another control apparatus is constituted for enable to control.

7. A power supplying apparatus for a vehicle, comprising:
a first power supply system for being wired in an interior of a vehicle through a fuse from a battery (3) and for supplying a power to a various kinds of loads of said vehicle;
a second power supply system for being wired in said interior of said vehicle through another fuse from a battery and for supplying the power to a control circuit of a control apparatus for controlling said load; and
a protection circuit for detecting a short abnormality of said first power supply system and for practicing a protection control of said first power supply system through said control circuit.

8. A power supplying apparatus for a vehicle, comprising:
a first power supply system for being wired in an interior of a vehicle through a fuse from a battery (3) and for supplying a power to a running control load of said vehicle;
a second power supply system for being wired in said interior of said vehicle through another fuse from said battery (3) and for supplying the power to an equipment system load of said vehicle; and
a third power supply system for being wired in said interior of said vehicle through a further another fuse from said battery and for supplying the power to a control circuit for controlling said equipment system load.

9. A power supplying control apparatus for a vehicle, comprising:
a vehicle mounting power supply;
a vehicle mounting load for receiving a supply of a power from said vehicle mounting power supply through a driver circuit (160,260,360);
a fuse connected between said vehicle mounting power supply and said driver circuit (160,260,360);
a shutdown circuit provided between said driver circuit (160,260,360) and a fuse; and
a control circuit (170,270,370) for giving a circuit shutdown signal to said shutdown circuit (110,210,310).

10. A power supplying apparatus for a vehicle, comprising:
a vehicle mounting power supply;
plural control modules (5,14,29) having a control circuit (170,270,370) in which a load drive signal is generated and a load drive circuit (160,260,360) for controlling a power supplying to a load according to a drive signal from said control circuit (170,270,370);
a large power line for supplying a load drive power from said vehicle mounting power supply through one fuse against to at least two said control modules; and
a small power line for supplying a control circuit use power from said vehicle mounting power supply through another fuse against to said control circuit of said respective control modules.

11. In a load control module which is installed to a specific position of a vehicle, the load control module (5,14,29) for a power supplying apparatus for a vehicle, comprising:
a communication circuit (140,240,340) connected to another module through a communication line;
a control circuit (170,270,370) for outputting a control signal of a load in accordance with a signal which is inputted through said communication circuit;
a battery (3);
a drive circuit (160,260,360) for controlling a power supplying to said load in accordance with an output signal from said control circuit (170,270,370);
a relay (111;211;311) for opening and closing a power line to a specific load by an output from said control circuit; and
a fuse connected between said battery (3) and said specific load and for fusing when an over-current is flown into said specific load.

12. A power supplying apparatus for a vehicle according to claim 8, the power supplying apparatus comprising further:
an ignition coil switch (26a) and/or an accessory switch (26b) connected to said battery through another fuse; and
another power supply system for supplying a power through from said ignition coil switch (26a) and/or said accessory switch (26b) to a further another fuse.

13. A power supplying apparatus for a vehicle, comprising:
a load control apparatus for receiving a load drive power from a vehicle mounting power supply through an ignition switch (26a) and a fuse which is connected in series to said ignition switch;
another control apparatus for receiving the power from said vehicle mounting power supply through another fuse; and
a backup power supply supplying line for supplying the power from said another control apparatus to said load control apparatus.

14. A power supplying apparatus for a vehicle, comprising:
a control apparatus in which a power is distributed from a vehicle mounting power supply through a fuse;
a shutdown apparatus provided an electric path of a power take-in portion of said control apparatus;
a driver circuit for supplying the power to a load through said shutdown apparatus;
another driver circuit for supplying the power to another load by going by a roundabout circuit of said shutdown apparatus.

15. A power supplying apparatus for a vehicle, comprising:
a relay (111,211,311) and/or fuse for opening a power line between a load and a power supply in a specific control condition being disperse arranged at a vicinity of plural control apparatuses which are arranged at a specific position of said vehicle.

16. A power supplying apparatus for a vehicle, comprising:
to a specific load, from a vehicle mounting power supply, a power being supplied through a fuse, a circuit shutdown relay (111;211;311), and a self shutdown type semiconductor switching element (163-168; 263-266;364,365,367,368).

17. A power supplying apparatus for a vehicle, comprising:
plural load control modules (5,10,11,14,16,18,20,29) connected by a communication line;
an electric wiring line for supplying a power to one of said load control modules (5,10,11,14,16,18,20,29) through a fuse; and
another electric wiring line for supplying the power to another of said load control modules through another fuse.

18. A power supplying apparatus for a vehicle, comprising:
a relay comprised of a relay coil which is supplied a power from a vehicle mounting power supply when an ignition switch (26a) and/or an accessory switch (26b) is closed and a relay contact which is closed when said relay coil is supplied the power;
a load control module (5,14) having a power distribution function connected to said vehicle mounting power supply through said relay contact;
said load module (5,14) comprising:
an input interface for taking in a load operation signal which is given by another control module and/or an outside operation signal generation means;
a control circuit (170,270) for outputting a load drive signal in accordance with said load operation signal which is taken in from said input interface; and
an output interface for outputting said load drive signal to a driver circuit (160,260) from said control circuit (170,270).

19. A power supplying apparatus for a vehicle according to claim 18,
said input interface has a communication circuit (140,240).

20. A power supplying apparatus for a vehicle according to claim 18,
a fuse is connected between said relay contact and said specific load.

21. A power supplying apparatus for an automobile, comprising:
a rear control module (29) installed to an area of a rear portion from a front portion seat of the automobile;
a front control module (5) installed to an area of a front portion from said front portion seat of the automobile;
a central control module (14) installed between said front control module (5) and said rear control module (29) of the automobile;
a rear side electric power line for connecting said rear control module (29) and a battery (3);
a front side electric power line for connecting said front control module (5) and said central control module (14) to said battery (3);
an ignition switch connected to an input interface of said central control module (14);
an ignition relay coil connected to a communication line said front control module (5);
an ignition relay contact for closing/opening in which said ignition relay coil is supplied or shutdown the power by a signal of said ignition switch which is inputted to said input interface of said front control module (5) from said central control module (14); and
a specific load in which the power from said front side electric power line is supplied through said ignition relay contact.

22. A power supplying apparatus for an automobile according to claim 21, comprising:
a fuse connected to between said ignition relay contact and said specific load.

23. A power supplying apparatus for an automobile according to claim 22, comprising:
said specific load being an alternator and/or a stator.

24. A power supplying apparatus for an automobile according to claim 22, comprising:
said ignition relay and said fuse received in a relay/fuse box which is provided adjacently to said control module.

25. A power supplying apparatus for an automobile, comprising:
a load drive control use drive circuit provided between a power supply of said automobile and a specific load;
a relay provided between said load drive control use drive circuit and said power supply;
a sleep control circuit for opening a relay contact by stopping the current flowing a coil of said relay and performing a shutdown an electric line to said specific load by a detection in which said automobile is not operated and said specific load is not needed a power.
